# EUROPÄISCHE PATENTSCHRIFT

(11) **EP 4 746 990 B1**
(45) Veröffentlichungstag und Bekanntmachung des Hinweises auf die Patenterteilung: **26.08.2026**
(21) Anmeldenummer: 25787341.4
(22) Anmeldetag: 29.09.2025
(51) Int. Cl.: B01D 46/10, B01D 46/52

(54) **FARBNEBELABSCHEIDEELEMENT UND FARBNEBELABSCHEIDEVORRICHTUNG**
PAINT MIST SEPARATING ELEMENT AND PAINT MIST SEPARATING DEVICE
ÉLÉMENT DE SÉPARATION DE BRUME DE PEINTURE ET DISPOSITIF DE SÉPARATION DE BRUME DE PEINTURE

(30) Priorität: 11.10.2024 DE 102024129396
(43) Veröffentlichungstag der Anmeldung: 27.05.2026
(73) Patentinhaber: NeuFilter GmbH, 48599 Gronau (DE)
(72) Erfinder: HERLINGER, Florian, 48599 Gronau (DE); BÖING, Thomas, 48599 Gronau (DE); HENKE, Daniel, 48599 Gronau (DE)
(74) Vertreter: Werner & ten Brink PAe PartGes mbB Bentheim
(86) Internationale Anmeldenummer: PCT/EP2025/077835
(87) Internationale Veröffentlichungsnummer: WO 2026/077755

(56) Entgegenhaltungen:
- CN-A- 114 405 177
- DE-A1- 102018 119 684
- US-A1- 2021 146 292

## Beschreibung

Die hier vorgeschlagene Neuerung betrifft das technische Gebiet des Abscheidens von mit einem Rohgasstrom mitgeführten Partikeln aus dem Rohgasstrom. Bei den abzuscheidenden Partikeln handelt es sich zum Beispiel um Farb- oder Lackpartikel und abzuscheidende Partikel (Farbnebel) werden zusammenfassend als Partikel bezeichnet.

Aus der WO 2017/016800 A1 sind ein Filterstrukturkörper für ein Filtermodul und ein mit dem Filterstrukturkörper zu bildendes Filtermodul bekannt. Der Filterstrukturkörper umfasst eine in Segmente unterteilte Stützstruktur und eine darauf angeordnete Filterlage. Der Filterstrukturkörper wird mit der Filterlage in einen das Gehäuse des Filtermoduls darstellenden Rahmen eingebracht. Zur Gewährleistung eines Abstands zwischen einzelnen Segmenten des Filterstrukturkörpers und damit eines Abstands zwischen Abschnitten der darauf angeordneten Filterlage sind Abstands- und/oder Versteifungselemente vorgesehen.

Aus der US 9,555,358 B und der EP 3 354 353 B1 sind ein Filtermodul und ein Verfahren zu dessen Herstellung bekannt. Im Innern des Filtermoduls ist eine Stützauflage vorgesehen, die im Wesentlichen dem Filterstrukturkörper der vorgenannten WO 2017/016800 A1 zu entsprechen scheint. Zur Gewährleistung eines Abstands zwischen einzelnen Segmenten der Stützauflage sowie einem daran angebrachten Filtermedium sind Laschen an den freien Kanten der Segmente sowie ein Deckel- und ein Bodenteil, jeweils mit Schlitzen zum Einstecken der Laschen, vorgesehen. Die Position der Schlitze und die Orientierung jeweils zweier zueinander benachbarter Schlitze geben die Ausrichtung und den Abstand zweier benachbarter Segmente der Stützauflage vor. Auch hier haust die Stützauflage das daran angebrachte Filtermedium zumindest teilweise ein, indem als Ober- und Unterteile fungierende Verbindungsstege ("web") eine Ober- und Unterkante des Filtermediums abdecken.

Ein Nachteil des bis hierher erörterten Standes der Technik besteht darin, dass bei einem in einen äußeren Rahmen eingesetzten Filterstrukturkörper und dergleichen eine Dichtschicht ober- und unterhalb des Filterstrukturkörpers und zur jeweils angrenzenden Innenoberfläche des Rahmens notwendig ist, damit der Rohgasstrom mit den abzuscheidenden Farbpartikeln nicht am Filterstrukturkörper vorbeiströmt (Leckluft), nämlich zwischen den Ober- und Unterteilen des Filterstrukturkörpers und dem Rahmen hindurchströmt.

Weitere Farbnebelabscheider sind in der DE102018119684, US2021/146292 und CN114405177 offenbart.

Aus der EP 2 540 509 B ist ein Papiergelegefiltermodul mit einem äußeren Rahmen und einem darin dreidimensional angeordneten Papiergelegefilter bekannt. Zur Gewährleistung eines Abstands zwischen einzelnen Abschnitten des Papiergelegefilters sind Abstandshalter vorgesehen, die jeweils flächig auf einen Abschnitt des Papiergelegefilters aufgelegt werden, wobei der nächstfolgende Abschnitt des Papiergelegefilters flächig auf den Abstandshalter aufgelegt wird.

Der Ansatz gemäß der EP 2 540 509 B vermeidet den Nachteil zusätzlich benötigter Dichtschichten, denn dort ist vorgesehen, dass der Rahmen den Papiergelegefilter, also die Filterlage/das Filtermedium, in einem Passsitz aufnimmt.

Bevor sich die hier vorgelegte Beschreibung konkret der damit vorgeschlagenen Neuerung zuwendet, sollen einzelne Begrifflichkeiten erläutert werden, wobei die Erläuterungen dann auch für die vorgeschlagene Neuerung selbst gelten:
Im Stand der Technik wird bei der Benennung einzelner Komponenten nicht streng zwischen einer Filtration und einer Abscheidung unterschieden. So wird ein zum Abscheiden von Farbnebel oder dergleichen bestimmtes Modul als Filtermodul oder zumindest auch als Filtermodul bezeichnet. Gleiches gilt für andere Begriffe wie zum Beispiel Filterstrukturkörper, Filterlage, Filtermedium, Filterkulisse und so weiter. Dies resultiert - zumindest soweit es Schutzrechte und Anmeldungen der Anmelderin der hier vorgeschlagenen Neuerung betrifft - aus dem Verständnis, dass ein Partikel mit sich führender Rohgasstrom stromabwärts der Farbnebelabscheidevorrichtung, also nach dem Durchströmen der Farbnebelabscheidevorrichtung und des davon umfassten Farbnebelabscheideelements, zumindest weniger Partikel mit sich führt als stromaufwärts der Farbnebelabscheidevorrichtung. Der Rohgasstrom verliert also gewissermaßen beim Durchströmen der Farbnebelabscheidevorrichtung einen Teil der zuvor mitgeführten Partikel. Genau dies ist der Zweck der Farbnebelabscheidevorrichtung, nämlich dass ausgangsseitig der Farbnebelabscheidevorrichtung die Partikelanzahl zumindest deutlich reduziert ist. Diese Reduktion der Partikelanzahl kann durch Abscheiden und/oder durch Filtern erfolgen. Die Begriffe Abscheiden und Filtern sind hier also austauschbar und ein Filterelement könnte auch als Abscheideelement, eine Filterlage als Abscheidelage und jeweils umgekehrt bezeichnet werden. Dies gilt für alle mit "Filter" oder "Abscheider" oder dergleichen gebildeten Begriffe und ist im Folgenden stets mitzulesen.

Eine Farbnebelabscheidevorrichtung ist in diesem Sinne zur Filtration und/oder Abscheidung von mit einem Rohgasstrom mitgeführten Partikeln, insbesondere Farb- oder Lackpartikeln, vorgesehen.

Eine Farbnebelabscheidevorrichtung umfasst in an sich bekannter Art und Weise ein Farbnebelabscheideelement und einen zu dessen Aufnahme bestimmten Rahmen, wie dies in der EP 2 540 509 B beschrieben ist.

Als zur Aufnahme des Farbnebelabscheideelements bestimmter Rahmen kommt zum Beispiel ein Karton in Betracht, wie dies ebenfalls in der EP 2 540 509 B beschrieben ist.

Der Rahmen einer Farbnebelabscheidevorrichtung hat eine dreidimensionale Raumform. Beispiele für eine dreidimensionale Raumform sind Würfel und Quader. Der Rahmen weist in einer Seitenfläche eine Einströmöffnung für den Eintritt des Rohgasstroms und in einer anderen Seitenfläche eine Ausströmöffnung auf. Die Seitenflächen mit der Ein- und Ausströmöffnung sind üblicherweise einander gegenüberliegende Seitenflächen. Der Rahmen umgibt das Farbnebelabscheideelement. Beim Eintritt in den Rahmen durch die Einströmöffnung trifft der Rohgasstrom auf das Farbnebelabscheideelement im Innern des Rahmens, nämlich auf einzelne Oberflächenabschnitte des Farbnebelabscheideelements.

Der Rahmen einer Farbnebelabscheidevorrichtung weist mehrere Seitenflächen auf, von denen eine entsprechend der Orientierung der Farbnebelabscheidevorrichtung bei deren Verwendung als Unterseite und die gegenüberliegende Seite als Oberseite bezeichnet wird. Zwei weitere Seitenflächen weisen die Ein- und Ausströmöffnung auf. Das bei einer gebrauchsfertigen Farbnebelabscheidevorrichtung im Rahmen platzierte Farbnebelabscheideelement weist Abschnitte mit einer vertikalen Orientierung auf. Vertikal meint dabei eine Orientierung entlang einer sowohl auf der Unterseite wie auch der Oberseite senkrecht stehenden Linie oder zumindest im Wesentlichen entlang einer solchen Linie. Das bei einer gebrauchsfertigen Farbnebelabscheidevorrichtung im Rahmen platzierte Farbnebelabscheideelement verläuft dort im weitesten Sinne zickzackförmig oder wellenförmig, nämlich in einer mäanderförmig mehrfach hin- und hergewendeten Anordnung. In der EP 2 540 509 B ist dies als dreidimensionale Anordnung bezeichnet. Dieses Verständnis wird auch hier und im Folgenden zugrunde gelegt. Aufgrund der dreidimensionalen Anordnung ergeben sich jedenfalls Buge und Taschen, wie dies ebenfalls in der EP 2 540 509 B beschrieben ist. Einzelne Buge weisen in Richtung auf die Einströmöffnung. Andere Buge weisen in Richtung auf die Ausströmöffnung. Zwischen zwei in Richtung auf die Einströmöffnung weisenden Bugen befindet sich entlang des Farbnebelabscheideelements ein in Richtung auf die Ausströmöffnung weisender Bug und zwischen zwei in Richtung auf die Ausströmöffnung weisenden Bugen befindet sich entlang des Farbnebelabscheideelements ein in Richtung auf die Einströmöffnung weisender Bug. Zwischen zwei in dieselbe Richtung weisenden Bugen befindet sich jeweils eine Tasche des Farbnebelabscheideelements. Der anströmende Rohgasstrom trifft auf die in Richtung auf die Einströmöffnung weisenden Buge sowie auf die Oberflächen der zwischen diesen Bugen befindlichen Taschen.

Das Farbnebelabscheideelement einer Farbnebelabscheidevorrichtung umfasst eine Farbnebelabscheideschicht, nämlich eine Farbnebelabscheideschicht, die zumindest eine Farbnebelabscheidelage umfasst und optional mehrere Farbnebelabscheidelagen umfasst.

Eine Farbnebelabscheideschicht ist im weitesten Sinne bahnförmig. Eine Farbnebelabscheideschicht hat eine Länge, eine Höhe und eine Dicke. Eine Farbnebelabscheideschicht ist bahnförmig, weil ihre Länge größer ist als ihre Höhe, zum Beispiel mindestens vier- bis fünfmal so groß, regelmäßig mehr als vier- bis fünfmal so groß. Die Farbnebelabscheideschicht hat eine solche Länge, weil sie - wie beschrieben - bei einer Verwendung in einer Farbnebelabscheidevorrichtung mehrfach hin- und hergewendet ist/wird. Die Höhe der Farbnebelabscheideschicht ist ihre Ausdehnung zwischen der Unter- und der Oberseite des Rahmens. Vor dem Platzieren der Farbnebelabscheideschicht im Rahmen, nämlich bei einer noch flach liegenden Farbnebelabscheideschicht, kann deren Höhe auch als Breite bezeichnet werden.

Eine Aufgabe der vorliegenden Erfindung besteht darin, eine Farbnebelabscheidevorrichtung wie oben beschrieben anzugeben, die ein Farbnebelabscheideelement sowie einen äußeren Rahmen zur Aufnahme des Farbnebelabscheideelements umfasst, wobei das Farbnebelabscheideelement am Einsatzort der Farbnebelabscheidevorrichtung schnell und einfach in dem Rahmen platzierbar ist. Eine weitere Aufgabe besteht darin, ein entsprechendes Farbnebelabscheideelement anzugeben.

Bezüglich des Farbnebelabscheideelements wird diese Aufgabe mit einem Farbnebelabscheideelement mit den Merkmalen des Anspruchs 1 gelöst. Bezüglich der Farbnebelabscheidevorrichtung wird diese Aufgabe mittels einer Farbnebelabscheidevorrichtung gelöst, die ein Farbnebelabscheideelement wie hier und im Folgenden beschrieben aufweist.

Das Farbnebelabscheideelement umfasst - in grundsätzlich an sich bekannter Art und Weise - eine Farbnebelabscheideschicht, nämlich eine zumindest eine Farbnebelabscheidelage umfassende Farbnebelabscheideschicht. Bei einer vorteilhaften Ausführungsform umfasst das Farbnebelabscheideelement eine komprimierbare Farbnebelabscheideschicht, nämlich eine zumindest eine komprimierbare Farbnebelabscheidelage umfassende Farbnebelabscheideschicht.

Als Farbnebelabscheidelage kommt zum Beispiel ein sogenanntes Papiergelege oder ein solches Gelege aus anderen Materialien oder mit anderen Materialien in Betracht. Ein Papiergelege oder ein solches Gelege aus oder mit anderen Materialien ist verformbar und zusätzlich auch komprimierbar. Entsprechend ist eine Farbnebelabscheidelage mit oder aus Papiergelege oder mit einem Gelege mit oder aus anderen Materialien eine verformbare, komprimierbare Farbnebelabscheidelage. Als Farbnebelabscheidelage kommt zusätzlich oder alternativ zum Beispiel ein sogenanntes Filtervlies in Betracht. Ein Filtervlies ist verformbar und komprimierbar. Entsprechend ist eine Farbnebelabscheidelage in Form von Filtervlies oder mit Filtervlies eine verformbare, komprimierbare Farbnebelabscheidelage. Verformbar bedeutet, dass sich eine Raumform einer Farbnebelabscheidelage ändern lässt, zum Beispiel von einer Raumform, wie sie sich bei einer flach auf einer ebenen Oberfläche liegenden Farbnebelabscheidelage ergibt, zu einer Raumform, wie sie sich bei einer gemäß der Beschreibung in der EP 2 540 509 B mehrfach hin und her gewendeten Farbnebelabscheidelage ergibt. Komprimierbar bedeutet, dass sich eine Dimension einer Farbnebelabscheidelage durch Krafteinwirkung verkleinern lässt und im Rahmen der hier vorgelegten Beschreibung bedeutet komprimierbar vor allem auch, dass ein flach auf eine Oberfläche gelegter Abschnitt der Farbnebelabscheidelage ohne eine in Richtung auf die Oberfläche wirkende Kraft eine erste Höhe oder Dicke aufweist und dass sich diese Dicke/Höhe im Falle einer in Richtung auf die Oberfläche wirkenden Kraft reduziert. Mit anderen Worten wird das Material der Farbnebelabscheidelage zusammengedrückt; es wird flacher.

Das Farbnebelabscheideelement umfasst darüber hinaus jeweils eine Trägerlage auf einer Frontseite und einer Rückseite der Farbnebelabscheideschicht (frontseitige Trägerlage, rückseitige Trägerlage), also eine Trägerlage auf der Frontseite der Farbnebelabscheideschicht (frontseitige Trägerlage) und eine weitere Trägerlage auf der Rückseite der Farbnebelabscheideschicht (rückseitige Trägerlage). Die Front- und die Rückseite der Farbnebelabscheideschicht sind dabei die beiden gegenüberliegenden großen Oberflächen der Farbnebelabscheideschicht.

Die front- und die rückseitige Trägerlage sind miteinander und mit der Farbnebelabscheideschicht mittels Verbindungsmitteln verbindbar und in gebrauchsfertigem Zustand mit der Farbnebelabscheideschicht verbunden. Als Verbindungsmittel kommen zum Beispiel rastende Verbindungsmittel oder alternativ sogenannte Buchschrauben oder dergleichen in Betracht. Die Verbindungsmittel verbinden einerseits die beiden Trägerlagen miteinander, nämlich die frontseitige Trägerlage mit der rückseitigen Trägerlage, und verbinden anderseits die beiden Trägerlagen mit der zwischen den beiden Trägerlagen befindlichen Farbnebelabscheideschicht. Optional ist die Verbindung lösbar. Das Farbnebelabscheideelement stellt sich danach als mehrlagige/mehrschichtige Komponente zum Erhalt einer Farbnebelabscheidevorrichtung dar. Die Trägerlagen verleihen der Farbnebelabscheideschicht Stabilität und dem Farbnebelabscheideelement insgesamt eine dessen Handhabung vereinfachende Stabilität. Die resultierende Stabilität ist wichtig, damit eine im Einsatz zunehmend mit Farbpartikeln oder dergleichen beladene und damit zunehmend schwerer werdende Farbnebelabscheideschicht nicht unter ihrem Eigengewicht zusammensackt. Ein Zusammensacken würde unmittelbar dazu führen, dass der zuvor durch die Farbnebelabscheideschicht hindurchströmende Rohgasstrom über der zusammengesackten Farbnebelabscheideschicht und damit an der Farbnebelabscheideschicht vorbeiströmen würde. Ein Auffangen der eigentlich abzuscheidenden Farbpartikel findet dann nicht mehr statt. Aber auch zeitlich vor einem oder unabhängig von einem in jedem Fall zu vermeidenden Zusammensacken der Farbnebelabscheideschicht gewährleistet die bei einer front- und einer rückseitigen Trägerlage resultierende Stabilität des Farbnebelabscheideelements ein dichtendes Anliegen der Farbnebelabscheideschicht zum Beispiel an den angrenzenden Innenoberflächen eines umgebenden Rahmens zur Vermeidung von Leckluft.

Aufgrund der Bahnform weist die Farbnebelabscheideschicht zwei gegenüberliegende lange Kanten auf, nämlich lange Kanten in Längsrichtung der bahnförmigen Erstreckung. Eine der Besonderheiten des hier vorgeschlagenen Farbnebelabscheideelements besteht darin, dass die front- und rückseitigen Trägerlagen mit einem Abstand von den langen Kanten der Farbnebelabscheideschicht enden. Aufgrund der Abstände (Abstand von jeder der langen Kanten) resultieren Überstände, nämlich über die Trägerlage überstehende und hier als Überstände bezeichnete Abschnitte der Farbnebelabscheideschicht.

Wenn die langen Kanten der Farbnebelabscheideschicht als obere und untere Kante der Farbnebelabscheideschicht aufgefasst werden, können die benachbarten Ränder der oder der jeweiligen Trägerlage entsprechend ebenfalls als obere und untere Ränder bezeichnet werden. Die Bezeichnung der langen Kanten der Farbnebelabscheideschicht als obere und untere Kante rechtfertigt sich, weil sich diese bei einer späteren Platzierung des Farbnebelabscheideelements in einem äußeren Rahmen bevorzugt unter der Innenoberfläche der Oberseite des Rahmens ("oben") bzw. über der Innenoberfläche der Unterseite des Rahmens ("unten") befinden.

Indem die Trägerlagen (frontseitige Trägerlage, rückseitige Trägerlage) mit einem Abstand von den langen Kanten der Farbnebelabscheideschicht enden, erstreckt sich über den oberen Rand sowie den unteren Rand einer jeden Trägerlage bis zur oberen bzw. unteren Kante der Farbnebelabscheideschicht ein Überstand der Farbnebelabscheideschicht. Dieser Überstand (randseitiger Überstand) ist bei einer Platzierung des Farbnebelabscheideelements in einem umgebenden Rahmen zur Abdichtung gegen die Innenoberflächen der Unter- und Oberseiten des Rahmens wirksam, sofern - aber dies wird natürlich vorausgesetzt - das Farbnebelabscheideelement und der Rahmen zueinander passen. Ein Farbnebelabscheideelement und ein Rahmen passen dann zueinander, wenn die oder jede Trägerlage jedenfalls nicht höher (Abstand zwischen unterem und oberen Rand der Trägerlage) als der Abstand zwischen den Innenoberflächen der Unter- und Oberseiten des Rahmens ist und die Farbnebelabscheideschicht zumindest genauso hoch (Abstand zwischen der Unter- und Oberkante der Farbnebelabscheideschicht) ist, insbesondere zumindest geringfügig höher ist, als der Abstand zwischen den Innenoberflächen der Unter- und Oberseiten des Rahmens. Dann nimmt der Rahmen das Farbnebelabscheideelement in einem Passsitz auf. Der Überstand der Farbnebelabscheideschicht ist dann zur unteren und oberen Abdichtung der Farbnebelabscheideschicht zu den Innenoberflächen des Rahmens wirksam. Der Überstand wirkt jeweils wie eine Dichtlippe. Eine zusätzliche Dichtschicht auf der Innenoberfläche der Unterseite des Rahmens und unter der Farbnebelabscheideschicht sowie auf der Farbnebelabscheideschicht und unter der Innenoberfläche der Oberseite des Rahmens ist nicht mehr erforderlich.

Diese Abdichtung ist deshalb besonders wirksam, weil bei dem Farbnebelabscheideelement vorgesehen ist, dass sich die über die Trägerlagen hinausragenden Überstände stauchen lassen (die Überstände zeichnen sich dadurch aus, dass sie stauchbar sind) und dass die Überstände beim Platzieren in einem Rahmen einer Farbnebelabscheidevorrichtung gestaucht werden. Die Stauchbarkeit ergibt sich aufgrund einer Verformbarkeit der Farbnebelabscheideschicht. Das Stauchen führt zu einer im weitesten Sinne elastischen Verformung der Überstände und diese Verformung bewirkt wiederum, dass bei einem in einem Rahmen einer Farbnebelabscheidevorrichtung platzierten Farbnebelabscheideelement die Überstände mit ihren oberen und unteren Kanten dichtend an den jeweiligen Innenoberflächen des Rahmens anliegen. Eine im weitesten Sinne elastische Verformung ist eine Verformung, bei welcher die Verformung nach der Entlastung zwar zurückgeht, aber ggf. nicht vollständig zurückgeht. Bei einer zumindest im weitesten Sinne elastischen Verformung weist das jeweilige Material ein federndes Verhalten auf und entsprechend weisen auch die stauchbaren Überstände ein federndes Verhalten auf. Mit diesem federnden Verhalten verkürzen sich die beim Platzieren in einem Rahmen einer Farbnebelabscheidevorrichtung gestauchten Überstände und aufgrund der Stauchung resultiert eine Federkraft, welche die Überstände dichtend an den jeweiligen Innenoberflächen des Rahmens anliegen lässt. Für die hier vorgelegte Beschreibung und die Ansprüche gilt, dass elastisch verformbar stets im weitesten Sinne elastisch verformbar bedeutet.

Bei einer vorteilhaften Ausführungsform des Farbnebelabscheideelements ist die Farbnebelabscheideschicht komprimierbar, umfasst also zumindest eine komprimierbare Farbnebelabscheidelage. Komprimierbar meint eine Verformbarkeit quer zu den großen Oberflächen der Farbnebelabscheideschicht. Eine komprimierte Farbnebelabscheideschicht ist also flacher (dünner) als eine nicht komprimierte, gleichartige Farbnebelabscheideschicht und ein komprimierter Bereich einer Farbnebelabscheideschicht ist flacher (dünner) als ein nicht komprimierter Bereich derselben Farbnebelabscheideschicht.

Mittels der front- und rückseitigen Trägerlagen sowie aufgrund deren Verbindung miteinander und mit der Farbnebelabscheideschicht ist die komprimierbare Farbnebelabscheideschicht komprimierbar und resultiert bei einem entsprechenden Abstand der Trägerlagen eine Komprimierung der komprimierbaren Farbnebelabscheideschicht. Die nicht von den Trägerlagen erfassten und damit nicht komprimierten Überstände sind nach dem Verbinden der Trägerlagen miteinander und mit der Farbnebelabscheideschicht in Relation zu den mittels der Trägerlagen komprimierten Bereichen der Farbnebelabscheideschicht aufgewölbt.

Die Bezeichnung als aufgewölbt meint einen Zustand. Auch als substantiviertes Verb bedeutet Aufwölben zuvorderst, dass die Farbnebelabscheideschicht im aufgewölbten Bereich dicker ist als in dem mittels der miteinander und mit der Farbnebelabscheideschicht verbundenen Trägerlagen komprimierten Bereich. Sie ist deshalb dort dicker, weil sie dort nicht komprimiert ist. Die Dicke wird dabei quer zu den großen Oberflächen der Farbnebelabscheideschicht gemessen. Auch als Verb meint aufwölben oder aufgewölbt zuvorderst den Zustand in Relation zu der Komprimierung mittels der Trägerlagen und impliziert nicht notwendig eine Zustandsänderung, nämlich zum Beispiel eine Zunahme der Dicke der Farbnebelabscheideschicht im Bereich der Überstände, wenngleich auch dies - zumindest in geringem Umfang - durchaus möglich ist. Mit anderen Worten: Aufgewölbt meint nicht - zumindest nicht notwendig -, dass der aufgewölbte Bereich zu irgend einem Zeitpunkt dicker wird; aufgewölbt meint vielmehr, dass der aufgewölbte Bereich (die Überstände) in Relation zu einem anderen nicht aufgewölbten Bereich (zwischen den Trägerlagen) dicker ist. Dieses Verständnis von aufgewölbt, aufwölben, Aufwölbung und dergleichen liegt der gesamten weiteren, hier vorgelegten Beschreibung zugrunde und ist stets mitzulesen.

Indem der aufgewölbte Bereich (die Aufwölbung) dicker ist, liegt der aufgewölbte Bereich großflächig an den Innenoberflächen des Rahmens an, zumindest liegt dieser auf einer größeren Fläche innen am Rahmen an als eine mittels zweier Trägerlagen komprimierte Farbnebelabscheideschicht ohne randseitige Überstände. Eine Abdichtung zu den Innenoberflächen des Rahmens ist mit gestauchten und aufgewölbten Überständen besonders wirksam.

Stauchbarkeit und Komprimierbarkeit sind Materialeigenschaften der Farbnebelabscheideschicht und zumindest einer der davon umfassten Farbnebelabscheidelagen. Stauchbarkeit ist eine Verformbarkeit der Farbnebelabscheideschicht parallel zu den durch die großen Oberflächen der Farbnebelabscheideschicht definierten Ebenen und dabei speziell eine Verformbarkeit quer zu den langen Kanten der Farbnebelabscheideschicht. Komprimierbarkeit ist eine Verformbarkeit der Farbnebelabscheideschicht quer zu den großen Oberflächen der Farbnebelabscheideschicht. Mit Bezug auf ein kartesisches Koordinatensystem kann für eine auf einer ausreichend großen Oberfläche ausgebreitete Farbnebelabscheideschicht eine der langen Kanten als entlang der x-Achse des Koordinatensystems verlaufend gedacht werden. Eine kürzeste Verbindung zwischen den beiden langen Kanten der Farbnebelabscheideschicht verläuft dann parallel zur y-Achse des Koordinatensystems. Entlang einer z-Achse des Koordinatensystems wird eine Dicke der Farbnebelabscheideschicht gemessen. Ein Stauchen der Farbnebelabscheideschicht erfolgt entlang der y-Achse des Koordinatensystems. Ein Komprimieren der Farbnebelabscheideschicht erfolgt entlang der z-Achse des Koordinatensystems. Mit anderen Worten reduziert ein Stauchen einer Farbnebelabscheideschicht eine entlang der y-Achse gemessene Breite der Farbnebelabscheideschicht und reduziert ein Komprimieren der Farbnebelabscheideschicht eine entlang der z-Achse gemessene Dicke der Farbnebelabscheideschicht. Eine stauchbare Farbnebelabscheideschicht ist regelmäßig - aber nicht notwendig - auch komprimierbar und umgekehrt.

Mit anderen Worten ausgedrückt umfasst das hier vorgeschlagene Farbnebelabscheideelement eine optional komprimierbare Farbnebelabscheideschicht und jeweils eine Trägerlage auf einer Front- und Rückseite der Farbnebelabscheideschicht (front- und rückseitige Trägerlage). Die front- und rückseitigen Trägerlagen sind mittels Verbindungsmitteln miteinander sowie mit der Farbnebelabscheideschicht verbunden. Die Farbnebelabscheideschicht weist zwei gegenüberliegende lange Kanten auf. Die front- und rückseitigen Trägerlagen enden mit Abstand von den langen Kanten der Farbnebelabscheideschicht. Aufgrund der Abstände resultieren stauchbare Überstände der Farbnebelabscheideschicht, nämlich im Rahmen der Materialeigenschaften der Farbnebelabscheideschicht verformbare, stauchbare Überstände. Bei einer komprimierbaren Farbnebelabscheideschicht resultiert bei einem entsprechenden Abstand der Trägerlagen mittels der front- und rückseitigen Trägerlagen sowie aufgrund deren Verbindung miteinander sowie mit der Farbnebelabscheideschicht eine Komprimierung der komprimierbaren Farbnebelabscheideschicht und aufgrund der Komprimierung der Farbnebelabscheideschicht sind die nicht komprimierten Überstände in Relation zu den mittels der Trägerlagen komprimierten Bereichen der Farbnebelabscheideschicht aufgewölbt - Aufwölbung der Farbnebelabscheideschicht im Bereich der Überstände.

Bei einer bevorzugten Ausführungsform umfasst das Farbnebelabscheideelement eine komprimierbare Farbnebelabscheideschicht sowie jeweils eine Trägerlage auf einer Front- und Rückseite der Farbnebelabscheideschicht (front- und rückseitige Trägerlage), wobei die front- und rückseitigen Trägerlagen mittels Verbindungsmitteln einerseits miteinander und andererseits mit der Farbnebelabscheideschicht verbunden sind, wobei die Farbnebelabscheideschicht zwei gegenüberliegende lange Kanten aufweist, wobei die front- und rückseitigen Trägerlagen mit Abstand von den langen Kanten der Farbnebelabscheideschicht enden und wobei das Farbnebelabscheideelement mittels eines die folgenden Schritte umfassenden Verfahrens hergestellt ist: Mittels der front- und rückseitigen Trägerlagen sowie aufgrund deren Verbindung miteinander wird die komprimierbaren Farbnebelabscheideschicht komprimiert und es resultiert eine Komprimierung der komprimierbaren Farbnebelabscheideschicht und die nicht komprimierten Überstände sind in Relation zu den mittels der Trägerlagen komprimierten Bereichen der Farbnebelabscheideschicht aufgewölbt.

Aufgrund der Verwendung der Trägerlagen lässt sich das Farbnebelabscheideelement insgesamt leicht in einem zu dessen Aufnahme vorgesehenen Rahmen platzieren. Mit der Platzierung (Einbau) des Farbnebelabscheideelements in dem jeweiligen Rahmen ergibt sich eine Farbnebelabscheidevorrichtung. Zudem kann eine Kombination von Farbnebelabscheideelement und Rahmen zum Erhalt einer Farbnebelabscheidevorrichtung auch leicht und vor allem auch durch lediglich kurz eingewiesenes und ggf. wenig qualifiziertes Personal erst am Verwendungsort der Farbnebelabscheidevorrichtung und/oder zeitlich in unmittelbarem Zusammenhang mit der geplanten Verwendung der Farbnebelabscheidevorrichtung erfolgen. Weiter kann das Farbnebelabscheideelement unterschiedliche, an einen jeweiligen Anwendungsfall angepasste/anpassbare Farbnebelabscheidelagen und/oder eine unterschiedliche Anzahl von Farbnebelabscheidelagen umfassen. Die Trägerlagen lassen sich leicht mit dem Farbnebelabscheideelement und der oder jeder davon umfassten Farbnebelabscheidelage verbinden.

Als Material für den Rahmen kommt - wie oben bereits geschrieben - zum Beispiel ein Karton in Betracht. Ein Karton (Umkarton) ist jedoch nur eine mögliche Ausführungsform eines Rahmens. Genauso kommt als Rahmen zum Beispiel eine das Farbnebelabscheideelement umgebende, vorzugsweise pyrolysefähige Metallstruktur, insbesondere Metallgitterstruktur, oder dergleichen in Betracht. Als Material für die oder jede Trägerlage und optional davon ggf. umfasste Trägerplatten kommt vorteilhaft Pappe, insbesondere in Form von Wellpappe in Betracht, zum Beispiel Pappe in Form von zweiwelliger Wellpappe. Alternativ kommt als Material auch Kunststoff in Betracht. Vorteilhaft ergibt sich dann eine den Materialeigenschaften des Kunststoffs entsprechende Festigkeit und/oder Steifigkeit. Nochmals weiter alternativ kommt als Material auch Metall in Betracht. Vorteilhaft ergibt sich dann eine Pyrolysefähigkeit. Als Farbnebelabscheidelage oder als eine von mehreren Farbnebelabscheidelagen kommt zum Beispiel ein an sich bekanntes Papiergelege, zum Beispiel ein Papiergelege wie in der EP 2 540 509 B beschrieben, in Betracht. Als Farbnebelabscheidelage oder als eine von mehreren Farbnebelabscheidelagen kommen des Weiteren zum Beispiel eine Vliesschicht oder dergleichen in Betracht.

Vorteilhafte Ausgestaltungen der hier vorgeschlagenen Neuerung sind Gegenstand der weiteren Ansprüche. Dabei verwendete Rückbeziehungen innerhalb der Ansprüche weisen auf die weitere Ausbildung des Gegenstandes des in Bezug genommenen Anspruchs durch die Merkmale des jeweiligen abhängigen Anspruchs hin. Sie sind nicht als ein Verzicht auf die Erzielung eines selbständigen, gegenständlichen Schutzes für die Merkmale oder Merkmalskombinationen eines abhängigen Anspruchs zu verstehen. Des Weiteren ist im Hinblick auf eine Auslegung der Ansprüche sowie der Beschreibung bei einer näheren Konkretisierung eines Merkmals in einem abhängigen Anspruch davon auszugehen, dass eine derartige Beschränkung in dem oder jedem vorangehenden Anspruch sowie einer allgemeineren Ausführungsform der gegenständlichen Vorrichtung nicht vorhanden ist. Jede Bezugnahme in der Beschreibung auf Aspekte abhängiger Ansprüche ist demnach auch ohne speziellen Hinweis ausdrücklich als Beschreibung optionaler Merkmale zu lesen.

Vorteilhaft ist vorgesehen, dass eine Trägerlage mehrere Trägerplatten umfasst. Besonders vorteilhaft ist dabei in grundsätzlich optionaler Art und Weise vorgesehen, dass alle Trägerplatten einer Trägerlage oder alle Trägerplatten beider Trägerlagen maßgleich sind, also Teile mit zumindest im Zweidimensionalen gleichen oder zumindest im Wesentlichen gleichen geometrischen Abmessungen (Länge, Breite) sind. Nochmals weiter optional sind alle Trägerplatten einer Trägerlage oder alle Trägerplatten beider Trägerlagen Gleichteile. Eine Unterteilung einer Trägerlage oder jeder Trägerlage in einzelne Trägerplatten ist vorteilhaft, weil sich mit den Abmessungen der Trägerplatten zum Beispiel die Form des Farbnebelabscheideelements nach dem mehrfachen Umwenden vorgeben lässt. Maßgleiche Teile, insbesondere Gleichteile, als Trägerplatten sind günstig, weil damit deren Herstellung vereinfacht wird und weil die Bevorratung vereinfacht wird.

Bei einer vorteilhaften Ausführungsform ist vorgesehen, dass die Trägerlagen zum Hindurchführen der Verbindungsmittel übermassige Löcher aufweisen und jeweils ein Verbindungsmittel zumindest einseitig in ein übermassiges Loch eingreift oder jeweils ein Verbindungsmittel durch jeweils an der Farbnebelabscheideschicht gegenüberliegende übermassige Löcher jeweils einer front- und rückseitigen Trägerlage geführt sind. Wenn die Trägerlagen jeweils einzelne Trägerplatten umfassen, gilt dies auch für die Trägerplatten: Jeweils eine Trägerplatte weist übermassige Löcher auf, in die Verbindungsmittel der jeweils anderen Trägerplatte eingreifen oder jeweils zwei Trägerplatten weisen zum Hindurchführen der Verbindungsmittel übermassige Löcher auf und jeweils ein Verbindungsmittel ist durch jeweils an der Farbnebelabscheideschicht gegenüberliegende übermassige Löcher jeweils einer front- und rückseitigen Trägerplatte geführt.

Ein übermassiges Loch ist ein Loch, das größer ist als dies für den Eingriff eines Verbindungsmittels oder das Hindurchführen eines Verbindungsmittels erforderlich wäre. Übermassige Löcher erlauben eine gewisse Beweglichkeit der Trägerlagen und/oder eventueller Trägerplatten relativ zueinander. Übermassige Löcher erlauben zudem eine gewisse Beweglichkeit front- und rückseitiger Trägerlagen oder eventueller front- und rückseitiger Trägerplatten relativ zueinander. Bei in einzelne Trägerplatten unterteilten Trägerlagen erlauben übermassige Löcher eine gewisse Beweglichkeit nicht nur der front- und rückseitigen Trägerplatten relativ zueinander, sondern auch eine ebensolche Beweglichkeit von auf derselben Oberfläche der Farbnebelabscheideschicht aufeinander folgenden Trägerplatten relativ zueinander. Bei einer vorteilhaften Ausführungsform sind die übermassigen Löcher als Langlöcher ausgeführt.

Ein Verbindungsmittel umfasst zum Beispiel einen Schaftabschnitt und an den Enden des Schaftabschnitts anschließende scheiben- oder pilzkopfförmige Endabschnitte. Eine sogenannte Buchschraube ist ein Beispiel für ein solches Verbindungsmittel. Andere Beispiele sind Halbhohlniete, Hohlniete oder Blindniete. Der Schaftabschnitt des Verbindungsmittels hat bei einem zylindrischen Schaftabschnitt einen Durchmesser und ein übermassiges Loch ist in Relation dazu ein Loch, dessen Durchmesser jedenfalls größer ist als der Durchmesser des Schaftabschnitts. Bei anderen möglichen Geometrien gilt sinngemäß dasselbe. Ein übermassiges Loch erlaubt aufgrund des Übermasses einen gleitenden Anschluss der mittels des Verbindungsmittels verbundenen Teile. Dabei handelt es sich um einen gleitenden Anschluss, weil die verbundenen Teile aufgrund des Übermasses relativ zueinander beweglich bleiben. Damit das Verbindungsmittel trotz des Übermasses des Lochs, durch welches des Verbindungsmittel geführt ist oder wird, die gewünschte Verbindung der beiden Teile bewirkt, sind die Endabschnitte so groß, dass sie zumindest stückweise über die Fläche des übermassigen Lochs hinausreichen.

Vor allem die Beweglichkeit von auf derselben Oberfläche der Farbnebelabscheideschicht aufeinander folgenden Trägerplatten relativ zueinander ist von großem Vorteil. Bei Langlöchern als übermassigen Löchern sind diese dafür in Längsrichtung der bahnförmigen Erstreckung der Farbnebelabscheideschicht orientiert (mit der langen Achse des Langlochs parallel zu den langen Kanten der Farbnebelabscheideschicht). Jede Trägerplatte ist damit auf der jeweiligen Oberfläche (Front- oder Rückseite) der Farbnebelabscheideschicht in gewissem Umfang in Längsrichtung der bahnförmigen Erstreckung der Farbnebelabscheideschicht beweglich. Bei einem Umwenden/Umklappen einzelner Abschnitte des Farbnebelabscheideelements zum Erhalt der zum Platzieren (Einbau) in einem äußeren Rahmen notwendigen Form ergeben sich an dem Farbnebelabscheideelement die eingangs erwähnten Buge. Genau wie bei einer Innenkurve und einer Außenkurve einer Straße ergeben sich beim Umwenden in Bereich der Buge unterschiedlich lange Strecken. Ein Abstand zwischen zwei auf einer Außenseite eines Bugs aufeinander folgenden Trägerplatten kann/muss größer sein als der Abstand zwischen zwei auf einer Innenseite eines Bugs aufeinander folgenden Trägerplatten. Die aufgrund der übermassigen Löcher/Langlöcher gegebene Beweglichkeit erlaubt genau die dafür notwendige Verschieblichkeit der Trägerplatten (jeder einzelnen Trägerplatte) entlang der Längserstreckung der Farbnebelabscheideschicht. Das notwendige mehrfache Umwenden der Farbnebelabscheideschicht ist damit leicht möglich, weil sich die Trägerplatten beim Umwenden im Wesentlichen selbständig verschieben, nämlich im Zuge des Umwendens und aufgrund des Umwendens. Aufgrund dieser Verschieblichkeit können vorteilhaft auch dieselben Trägerplatten mit unterschiedlich dicken Farbnebelabscheideschichten, zum Beispiel unterschiedlichen Dicken aufgrund einer unterschiedlichen Anzahl von Farbnebelabscheidelagen, verwendet werden, denn bei größeren Dicken ist eine größere Beweglichkeit erforderlich und der Umfang der Beweglichkeit ist nur durch die Weite der übermassigen Löcher oder die Länge der Langlöcher begrenzt, die zu diesem Zweck eine zur Verwendung mit Farbnebelabscheideschichten mit unterschiedlichen Dicken geeignete Weite bzw. Länge aufweisen.

Die eingangs genannte Aufgabe wird ebenfalls gelöst mittels einer Farbnebelabscheidevorrichtung mit einem Farbnebelabscheideelement wie hier und im Folgenden beschrieben sowie mit einem zur Aufnahme des Farbnebelabscheideelements bestimmten Rahmen, wobei das Farbnebelabscheideelement im Innern des Rahmens platziert ist oder im Innern des Rahmens platzierbar ist.

Zu der hier vorgeschlagenen Neuerung gehört auch deren Verwendung, nämlich die Verwendung eines Farbnebelabscheideelements wie hier und im Folgenden beschrieben und die Verwendung einer Farbnebelabscheidevorrichtung wie hier und im Folgenden beschrieben zum Abscheiden von mit einem Rohgasstrom mitgeführten Partikeln.

Die mit der Anmeldung eingereichten Patentansprüche sind Formulierungsvorschläge ohne Präjudiz für die Erzielung weitergehenden Patentschutzes. Da speziell die Merkmale der abhängigen Ansprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der jeweils in Bezug genommenen Ansprüche unabhängige Gestaltung aufweisen.

Ein spezieller Vorteil, der für die hier vorgeschlagene Neuerung insgesamt gilt, besteht darin, dass das Farbnebelabscheideelement und der zu dessen Aufnahme bestimmte Rahmen bis zur Verwendung wenig Raum beanspruchen, weil sie in flachem Zustand versandt werden können. Bei einem flach versandten Rahmen besteht die Möglichkeit, diesen erst am Einsatzort aufzustellen, also für eine Aufnahme eines Farbnebelabscheideelements vorzubereiten, und bei einem flach versandten Farbnebelabscheideelement besteht ebenfalls die Möglichkeit, dieses erst am Einsatzort vorzubereiten, nämlich für eine gebrauchsfertige Konfiguration mehrfach hin- und herzuwenden und in dieser Konfiguration im Rahmen zu platzieren. Im Vergleich zu großvolumigen Farbnebelabscheidevorrichtungen lassen sich durch das flache Versenden Transportkosten einsparen und/oder es lässt sich bei gleichen Transportkosten eine grö-ßere Teilemenge versenden.

Nachfolgend wird ein Ausführungsbeispiel der hier vorgeschlagenen Neuerung anhand der Zeichnung näher erläutert. Einander entsprechende Gegenstände oder Elemente sind in allen Figuren mit den gleichen Bezugszeichen versehen. Bei mehrfach vorkommendenden Elementen sind - mit Blick auf die Übersichtlichkeit der Zeichnung - oftmals nicht alle Elemente mit dem jeweiligen Bezugszeichen bezeichnet. Insoweit wird auf die bezeichneten Elemente oder eine eventuelle Bezeichnung desselben Elements in anderen Figuren verwiesen.

Das Ausführungsbeispiel ist nicht als Einschränkung der Erfindung zu verstehen. Vielmehr sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- Fig. 1, Fig. 2 und Fig. 3: ein Farbnebelabscheideelement, welches eine Farbnebelabscheideschicht und damit verbundene Trägerplatten aufweist,
- Fig. 4, Fig. 5 und Fig. 6: einzelne Trägerplatten,
- Fig. 7: eine Explosionsdarstellung des Farbnebelabscheideelements aus Fig. 1 bis Fig. 3,
- Fig. 8: eine vergrößerte Einzelheit aus Fig. 7,
- Fig. 9: eine vergrößerte Einzelheit analog zu Fig. 8, aber mit anderen Verbindungsmitteln,
- Fig. 10: ein Trägerplatte mit Raststiften als Verbindungsmitteln,
- Fig. 11: eine vergrößerte Einzelheit aus Fig. 10,
- Fig. 12: einen Schnitt durch ein Farbnebelabscheideelement mit einer zwischen gegenüberliegenden Trägerplatten komprimierten Farbnebelabscheideschicht,
- Fig. 13: eine vergrößerte Einzelheit aus Fig. 12,
- Fig. 14: einen Schnitt durch ein Farbnebelabscheideelement mit einer zwischen gegenüberliegenden Trägerplatten komprimierten Farbnebelabscheideschicht und mit im Vergleich zu Fig. 12 anderen Verbindungsmitteln,
- Fig. 15: eine vergrößerte Einzelheit aus Fig. 14,
- Fig. 16 und Fig. 17: eine gebrauchsfähige Konfiguration des Farbnebelabscheideelements aus Fig. 1 bis Fig. 3, nämlich einerseits (Fig. 16) in einer isometrischen Ansicht und andererseits (Fig. 17) in einer Draufsicht auf eine der langen Kanten der Farbnebelabscheideschicht, sowie
- Fig. 18: eine Momentaufnahme beim Platzieren (Einbau) eines Farbnebelabscheideelements gemäß Fig. 1 bis Fig. 3 in einem Rahmen zum Erhalt einer Farbnebelabscheidevorrichtung.

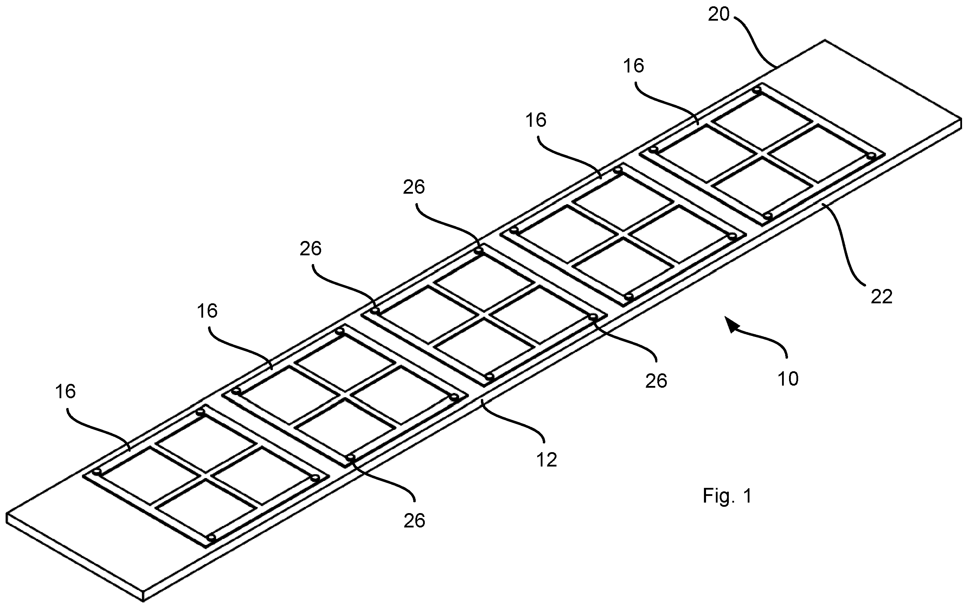

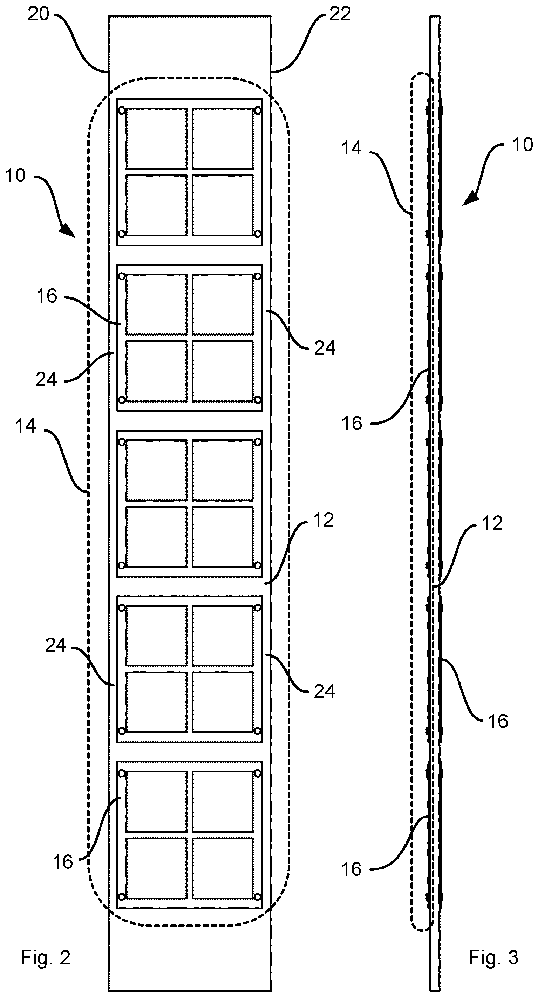

Die Darstellungen in Figur 1, Figur 2 und Figur 3 zeigen eine beispielhafte Ausführungsform eines im Folgenden mitunter auch kurz als Abscheideelement 10 bezeichneten Farbnebelabscheideelements 10 der hier vorgeschlagenen Art in unterschiedlichen Ansichten. Die Darstellung in Figur 1 zeigt das Farbnebelabscheideelement 10 in einer isometrischen Ansicht. Die Darstellung in Figur 2 zeigt das Farbnebelabscheideelement 10 in einer Draufsicht und die Darstellung in Figur 3 zeigt das Farbnebelabscheideelement 10 in einer Seitenansicht.

Das (Farbnebel-)Abscheideelement 10 weist eine im Folgenden kurz als Abscheideschicht 12 bezeichnete Farbnebelabscheideschicht 12 und auf einer Front- und Rückseite der Abscheideschicht 12 jeweils eine Trägerlage 14 (Fig. 2, Fig. 3; in Fig. 3 mit Blick auf die Übersichtlichkeit nur auf einer Seite bezeichnet) auf. Die Front- und die Rückseite sind die beiden großen Oberflächen der Abscheideschicht 12. Bei der gezeigten Ausführungsform weist jede Trägerlage 14, also die frontseitige Trägerlage 14 und die rückseitige Trägerlage 14, jeweils mehrere Trägerplatten 16 auf. Die Gesamtheit der Trägerplatten 16 auf derselben Oberfläche der Abscheideschicht 12 bildet die dortige Trägerlage 14. Die Trägerlagen 14 und bei einzelnen Trägerplatten 16 auch die Trägerplatten 16 sind mit der Abscheideschicht 12 verbunden, insbesondere miteinander und mit der Abscheideschicht 12 verbunden.

Die (Farbnebel-)Abscheideschicht 12 umfasst zumindest eine Farbnebelabscheidelage und als Farbnebelabscheidelage kommen zum Beispiel ein sogenanntes Papiergelege, wie in der EP 2 540 509 B beschrieben, und/oder eine Vliesschicht oder dergleichen in Betracht. Bei der gezeigten Ausführungsform wird davon ausgegangen, dass die Abscheideschicht 12 verformbar und im Rahmen der Verformbarkeit komprimierbar ist und dass im Bereich der mit der Abscheideschicht 12 verbundenen Trägerlagen 14 aufgrund der Verbindung der Trägerlagen 14 miteinander und mit der Abscheideschicht 12 eine Komprimierung der Abscheideschicht 12 resultiert. Eine Verbindung der Trägerlagen 14 miteinander und mit der Abscheideschicht 12 ohne eine aufgrund der Verbindung resultierende Komprimierung der Abscheideschicht 12 ist im Folgenden gleichwohl stets mitzulesen.

Die Komprimierung der Abscheideschicht 12 resultiert aufgrund eines entsprechenden Abstands der Trägerlagen 14. Der Abstand der miteinander und mit der Abscheideschicht 12 verbundenen Trägerlagen 14 ist also geringer als eine Dicke einer gleichartigen Abscheideschicht 12, die zum Beispiel ohne äußere Krafteinwirkung flach auf einer ausreichend großen Oberfläche aufliegt.

Die Abscheideschicht 12 weist ersichtlich eine langgestreckte Bahnform auf und weist zwei gegenüberliegende, parallele lange Kanten 20, 22 (Fig. 1, Fig. 2) auf. Die Trägerplatten 16 sind rechteckig, insbesondere quadratisch. Die langen Kanten 20, 22 der Abscheideschicht 12 und die benachbarten Ränder der Trägerplatten 16 sind parallel zueinander oder zumindest im Wesentlichen parallel zueinander. Die Gesamtheit der den lange Kanten 20, 22 der Abscheideschicht 12 benachbarten Ränder der Trägerplatten 16 bilden den Rand der diese Trägerplatten 16 umfassenden Trägerlage 14 und auch dieser Rand ist parallel oder zumindest im Wesentlichen parallel zu den benachbarten langen Kanten 20, 22.

Eine der Besonderheiten des Abscheideelements 10 besteht darin, dass die Trägerlagen 14 mit Abstand von den langen Kanten 20, 22 der Abscheideschicht 12 enden. Zwischen jeder langen Kante 20, 22 und dem benachbarten Rand einer jeden Trägerplatte 16 bleibt also ein Überstand 24 (in Fig. 2 neben einzelnen Trägerplatten 16 bezeichnet), nämlich ein Überstand 24 der Abscheideschicht 12 am Rand der Abscheideschicht 12 (randseitiger Überstand 24) und über den Rand einer jeden Trägerplatte 16 hinaus und damit auch über den Rand der durch die Gesamtheit der Trägerplatten 16 gebildeten Trägerlage 14 hinaus. Der Überstand 24 ergibt sich bis zu jeder langen Kante 20, 22, also beidseitig der Trägerlage 14/beidseitig der Trägerplatten 16. Das Abscheideelement 10 weist also an jeder langen Kante 20, 22 jeweils einen randseitigen Überstand 24 auf und weist mithin zwei randseitige Überstände 24 auf. Diese randseitigen Überstände 24 lassen sich in Richtung auf die Ränder der Trägerplatten 16 und parallel zur Ebene der Trägerplatten 16 zusammendrücken ("stauchen"; die Überstände 24 sind stauchbar). Die Überstände 24 sind stauchbar einerseits aufgrund der Materialeigenschaften der Abscheideschicht 12 (elastisch verformbar, nämlich im weitesten Sinne elastisch verformbar) und andererseits aufgrund ihrer über die Trägerlage 14 überstehenden Position (am Rand der Trägerlage 14/der Trägerplatten 16 und von der Trägerlage 14/den Trägerplatten 16 nicht mehr erfasst).

Während im Bereich der mit der Abscheideschicht 12 verbundenen Trägerlagen 14 aufgrund der Verbindung der Trägerlagen 14 mit der Abscheideschicht 12 eine Komprimierung der Abscheideschicht 12 resultiert, ist die Abscheideschicht 12 im Bereich der Überstände 24 nicht komprimiert. Eine quer zu den großen Oberflächen der Abscheideschicht 12 gemessene Dicke der Abscheideschicht 12 ist im Bereich der nicht komprimierten Überstände 24 größer als in den mittels der Trägerlagen 14 komprimierten Bereichen. Dieser Zustand der Überstände 24 wird als aufgewölbt bezeichnet und es wird das eingangs skizzierte Verständnis zugrunde gelegt. Die Überstände 24 sind - bei der beispielhaft gezeigten Ausführungsform - stauchbar und aufgewölbt.

Bevorzugt sind alle mit einer Abscheideschicht 12 verbundenen Trägerplatten 16 einer Trägerlage 14 maßgleich, weisen also in der Ebene (im Zweidimensionalen) gleiche Außenabmessungen (Länge, Breite; jeweils entlang der langen Achsen gemessen) auf, wobei es auf eine Höhe nicht ankommt. Besonders bevorzugt sind alle mit einer Abscheideschicht 12 verbundenen Trägerplatten 16 maßgleich. Optional sind alle Trägerplatten 16 einer Trägerlage 14 Gleichteile.

Die front- und die rückseitige Trägerlage 14, nämlich die jeweils davon umfassten Trägerplatten 16, sind miteinander und mit der Abscheideschicht 12 verbunden. Dafür sind Verbindungsmittel 26 vorgesehen. Als Verbindungsmittel 26 fungieren bei der gezeigten Ausführungsform beispielhaft sogenannte Buchschrauben 34. Bei der gezeigten Ausführungsform sind die Trägerplatten 16 miteinander und mit der Abscheideschicht 12 mittels jeweils eines Verbindungsmittels 26 im Bereich jeder ihrer Ecken miteinander verbunden. Beim Verbinden der Trägerplatten 16 miteinander und mit der Abscheideschicht 12 (mit anderen Worten: beim Anbringen der Trägerplatten 16 an der Abscheideschicht 12) wird die Abscheideschicht 12 von den Trägerplatten 16 eingefasst (ansonsten lose eingefasst) und optional komprimiert. Ansonsten lose eingefasst meint, dass die durch die Abscheideschicht 12 hindurchgeführten Verbindungsmittel 26 die Abscheideschicht 12 halten und dass die Abscheideschicht 12 ansonsten mittels der flächig an den gro-ßen Oberflächen der Abscheideschicht 12 anliegenden Trägerplatten 16 gestützt wird. Im Fall einer Komprimierung der Abscheideschicht 12 mittels der Trägerplatten 16 ist diese Stützwirkung besonders stark.

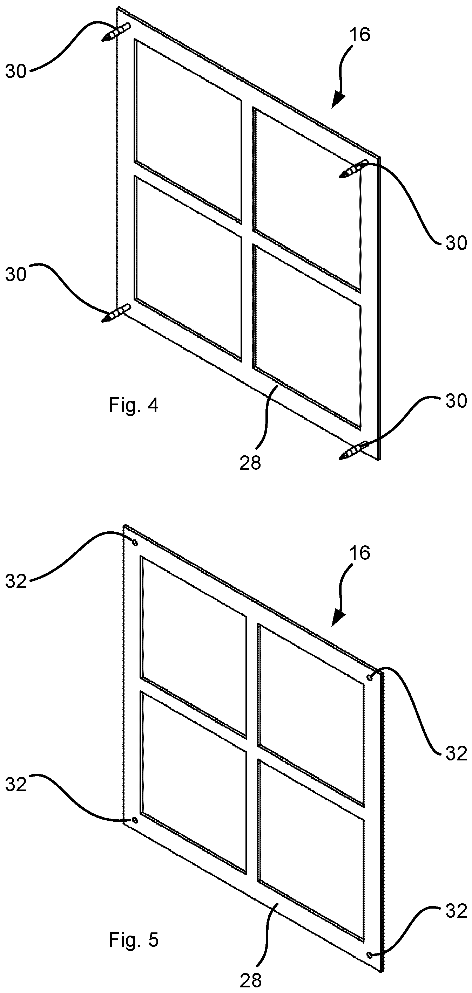

Die Darstellungen in Figur 4, Figur 5 und Figur 6 zeigen jeweils eine einzelne Trägerplatte 16. Die Trägerplatten 16 sind strukturiert. Die Struktur umfasst bei der gezeigten Ausführungsform einen umlaufenden Rahmen 28. Die Seitenteile des Rahmens 28 sind durch eine oder mehrere Streben miteinander verbunden, zum Beispiel indem die beiden jeweils zueinander parallelen Seitenteile durch jeweils eine Strebe miteinander verbunden sind. Es ergeben sich also zwei nach Art eines Fensterkreuzes senkrecht miteinander verbundene Streben. Die Streben erhöhen die Stabilität einer Trägerplatte 16.

Anstelle eines umlaufenden Rahmens 28 mit vier Seitenteilen und mit mittels zumindest einer Strebe miteinander verbundenen Seitenteilen, kommt auch eine Form mit zwei Seitenteilen und zumindest einer Strebe (H-Form, Z-Form) oder eine Form ohne Seitenteile (X-Form) oder dergleichen in Betracht. Die gezeigte Ausführungsform sowie eine H-Form, Z-Form und X-Form zeichnen sich durch eine Punktsymmetrie hinsichtlich der Eckpunkte aus. Andere Geometrien und Geometrien ohne eine solche Symmetrie sind ebenfalls denkbar.

Die Struktur der Trägerplatten 16 umfasst eine oder mehrere von den Seitenteilen umgebene oder von den Seitenteilen zumindest abschnittsweise begrenzte Freiflächen. Bei den gezeigten Ausführungsformen ergeben sich aufgrund der beiden Streben vier Freiflächen. Bei anderen Ausführungsformen kann sich eine andere Anzahl und/oder eine andere Form der Freiflächen ergeben. Die Freiflächen gewährleisten eine gute Durchströmung der Abscheideschicht 12. Bei Trägerplatten 16 einer frontseitigen Trägerlage 14 trifft der Rohgasstrom mit den abzuscheidenden Partikeln durch die Freiflächen hindurch auf die Abscheideschicht 12 und dringt je nach Art der Abscheideschicht 12 und der oder jeder davon umfassten Lage(n) in die Abscheideschicht 12 ein. Bei Trägerplatten 16 einer rückseitigen Trägerlage 14 tritt der Rohgasstrom (oder der von mitgeführten Partikeln bereits befreite oder zumindest weitgehend befreite (Roh-)Gasstrom) durch die Freiflächen hindurch wieder aus der Abscheideschicht 12 aus.

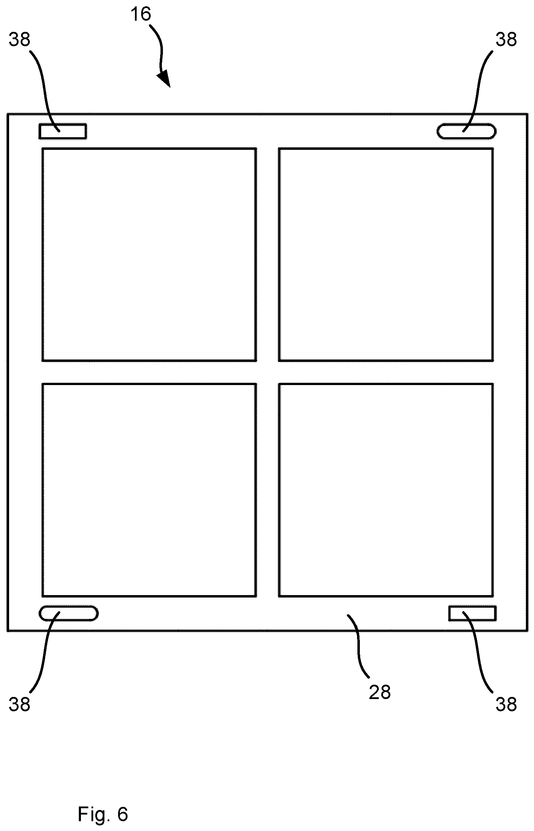

Die Darstellungen in Figur 4 und Figur 5 einerseits und die Darstellung in Figur 6 andererseits zeigen Ausführungsformen mit unterschiedlichen Verbindungsmitteln 26 bzw. für unterschiedliche Verbindungsmittel 26.

Bei der in Figur 4 und Figur 5 gezeigten Ausführungsform fungieren als Verbindungsmittel 26 einerseits Raststifte 30 und andererseits zur rastenden Aufnahme solcher Raststifte 30 bestimmte Rastausnehmungen 32. Die Verbindungsmittel 26, nämlich die Raststifte 30 und die Rastausnehmungen 32, befinden sich im Bereich der Ecken der Trägerplatten 16, insbesondere - wie gezeigt - im Bereich jeder Ecke. Trägerplatten 16 mit Raststiften 30 und Trägerplatten 16 mit Rastausnehmungen 32 sind maßgleich und die Raststifte 30 einer Trägerplatte 16 fluchten axial mit den Rastausnehmungen 32 einer anderen Trägerplatte 16. Alle Raststifte 30 einer Trägerplatte 16 können also in die Rastausnehmungen 32 einer anderen Trägerplatte 16 eingreifen. Die beiden Trägerplatten 16 sind so mittels solcher Verbindungsmittel 26 miteinander und mit einer zwischen den Trägerplatten 16 befindlichen Abscheideschicht 12 verbindbar. Die Raststifte 30 durchdringen dabei die Abscheideschicht 12. Auch wenn bei der gezeigten Ausführungsform die Trägerplatten 16 jeweils entweder Raststifte 30 oder Rastausnehmungen 32 aufweisen, sind auch - in jeweils korrespondierender Ausführung - Trägerplatten 16 mit Raststiften 30 und mit Rastausnehmungen 32 denkbar.

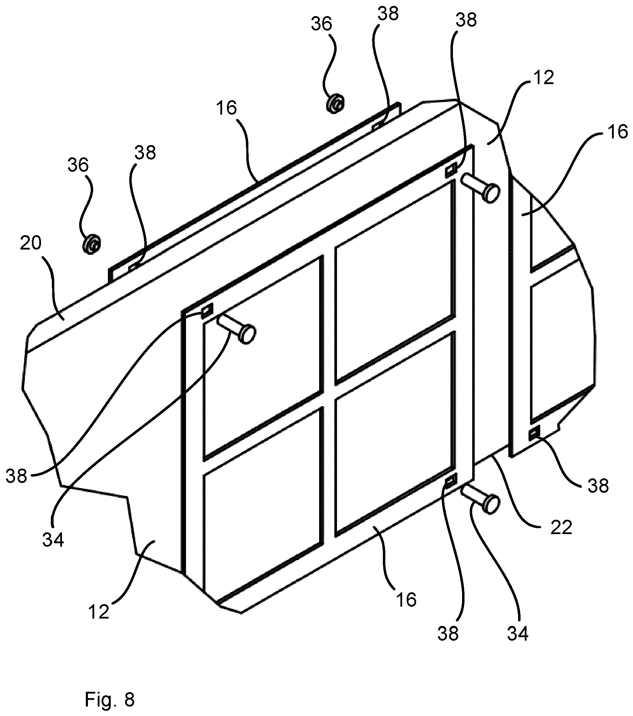

Bei der in Figur 6 gezeigten Ausführungsform einer Trägerplatte 16 sind als Verbindungsmittel 26 zum Beispiel sogenannte Buchschrauben 34 (Fig. 8) vorgesehen und die Trägerplatte 16 weist dafür Löcher 38 zum Hindurchführen der Buchschrauben 34 auf. Eine Buchschraube 34 umfasst die sogenannte Buchschraubenhülse 34, zum Beispiel eine Buchschraubenhülse 34 in Form einer Buchschraubenmutter, und ein zum Verbinden mit der Buchschraubenhülse 34 bestimmtes Buchschraubengegenstück 36, zum Beispiel ein Buchschraubengegenstück 36 in Form einer Buchschraubenschraube. Die zum Hindurchführen der Buchschrauben 34 (genauer: der Buchschraubenhülse 34) bestimmten Löcher 38 befinden sich bevorzugt im Bereich der Ecken der Trägerplatte 16, insbesondere - wie gezeigt - jeweils ein Loch 38 im Bereich jeder Ecke. Trägerplatten 16 mit zum Verbinden mittels Verbindungsmitteln 26 wie Buchschrauben 34 bestimmten Löchern 38 sind maßgleich und die Löcher 38 zweier Trägerplatten 16 fluchten miteinander. Die jeweiligen Verbindungsmittel 26, insbesondere Buchschrauben 34, können also in die Löcher 38 zweier in verschiedenen Ebenen übereinander liegender Trägerplatten 16 eingreifen. Jeweils zwei Trägerplatten 16 sind so mittels solcher Verbindungsmittel 26 miteinander und mit einer zwischen den Trägerplatten 16 befindlichen Abscheideschicht 12 verbindbar.

Die Löcher 38 erlauben zumindest das Hindurchstecken eines jeweiligen Verbindungsmittels 26. Die Löcher 38 sind also hinsichtlich ihrer Größe auf das jeweilige Verbindungsmittel 26 abgestimmt. Bevorzugt sind die Löcher 38 jedoch als übermassige Löcher 38 ausgeführt, d.h. sie sind größer als dies für das Hindurchstecken des jeweiligen Verbindungsmittels 26 notwendig wäre. Eine spezielle Ausführungsform übermassiger Löcher 38 sind Langlöcher 38. In der Darstellung in Figur 6 ist die Trägerplatte 16 mit übermassigen Löchern 38 in Form von Langlöchern 38 gezeigt, nämlich - jeweils beispielhaft - in der linken oberen und rechten unteren Ecke mit rechteckigen Langlöchern 38 und in der rechten oberen und linken unteren Ecke mit Langlöchern 38 mit abgerundeten Ecken.

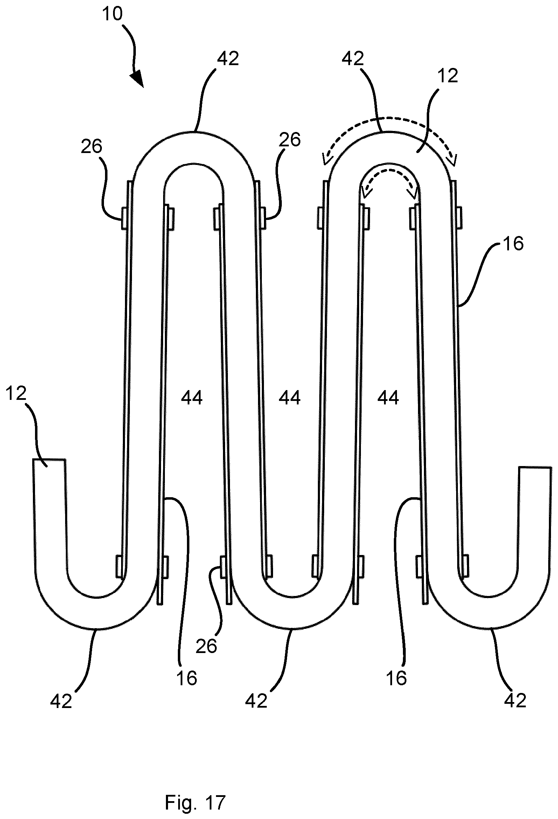

Allgemein erlauben die übermassigen Löcher 38, insbesondere übermassige Löcher 38 in Form von Langlöchern 38, eine gewisse Beweglichkeit einer mit einer Abscheideschicht 12 verbundenen Trägerplatte 16 relativ zu der Abscheideschicht 12, wenn Verbindungsmittel 26 durch solche Löcher 38 geführt sind oder in solche Löcher 38 eingreifen. Im Falle einer Verbindung aller zu einer Trägerlage 14 gehörigen Trägerplatten 16 auf diese Weise ergibt sich diese Beweglichkeit für die gesamte Trägerlage 14 sowie für jede davon umfasste Trägerplatte 16. Dazu wird auf die Darstellung in Figur 17 und die zugehörige Erläuterung verwiesen.

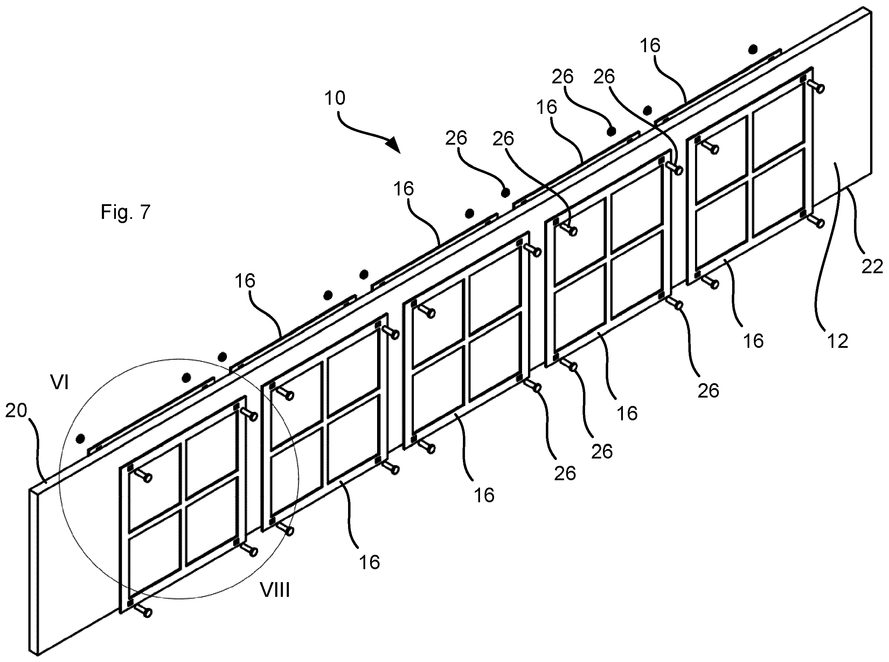

Die Darstellung in Figur 7 zeigt eine Explosionsansicht des Abscheideelements 10 gemäß Figur 1 bis Figur 3, wobei als Verbindungsmittel 26 exemplarisch Buchschrauben 34 fungieren. Erkennbar werden mit der Abscheideschicht 12 beidseitig, also auf ihrer Front- und Rückseite, Trägerplatten 16 verbunden und die Trägerplatten 16 liegen einander an der Abscheideschicht 12 paarweise gegenüber. In dieser paarweisen Anordnung sind sie miteinander und mit der Abscheideschicht 12 verbindbar/verbunden. Zur Verbindung sind Verbindungsmittel 26 vorgesehen, die hier beispielhaft in Form von Buchschrauben 34 gezeigt sind. In der paarweisen Anordnung halten die Trägerplatten 16 die Abscheideschicht 12 einerseits in Form und bewirken bei einer komprimierbaren Abscheideschicht 12 und einem entsprechenden Abstand der Trägerplatten 16 voneinander andererseits eine Komprimierung der Abscheideschicht 12, nämlich durch den mittels der Trägerplatten 16 auf die Abscheideschicht 12 ausgeübten Anpressdruck. Dies erhöht die Stabilität der Abscheideschicht 12 und des Abscheideelements 10 insgesamt und die nicht komprimierten Überstände 24 sind in Relation zu den mittels der Trägerlagen 14 komprimierten Bereichen der Abscheideschicht 12 aufgewölbt, nämlich in den Bereichen, in denen der mittels der Trägerplatten 16 ausgeübte Anpressdruck nicht wirkt.

Die Darstellung in Figur 8 zeigt vergrößert einen Ausschnitt aus der Darstellung in Figur 7, nämlich eine Vergrößerung des dort mit VIII bezeichneten Bereichs.

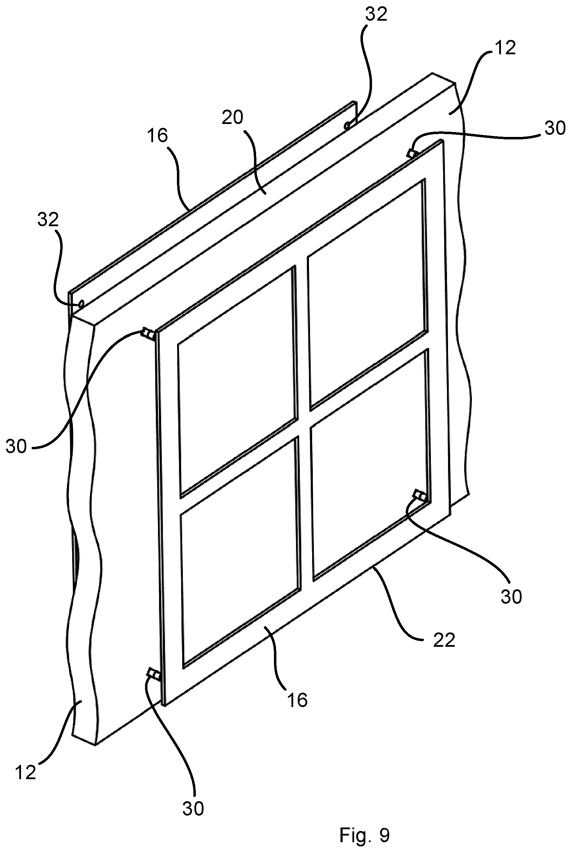

Die Darstellung in Figur 9 zeigt - analog zu der Darstellung in Figur 8 - einen vergrößerten Ausschnitt eines Abscheideelements 10 gemäß Figur 1 bis Figur 3, wobei als Verbindungsmittel 26 beispielhaft Raststifte 30 und Rastausnehmungen 32 (Fig. 4, Fig. 5) fungieren. Erkennbar werden mit der Abscheideschicht 12 beidseitig, also auf ihrer Front- und Rückseite, Trägerplatten 16 verbunden und die Trägerplatten 16 liegen einander an der Abscheideschicht 12 paarweise gegenüber. In dieser paarweisen Anordnung sind sie miteinander und mit der Abscheideschicht 12 verbindbar/verbunden. Zur Verbindung sind Verbindungsmittel 26 vorgesehen, die hier beispielhaft in Form von Raststiften 30 und Rastausnehmungen 32 gezeigt sind. In der paarweisen Anordnung halten die Trägerplatten 16 die Abscheideschicht 12 einerseits in Form und bewirken bei einer komprimierbaren Abscheideschicht 12 und einem entsprechenden Abstand der Trägerplatten 16 voneinander andererseits eine Komprimierung der komprimierbaren Abscheideschicht 12, nämlich durch den mittels der Trägerplatten 16 auf die Abscheideschicht 12 ausgeübten Anpressdruck. Dies erhöht die Stabilität der Abscheideschicht 12 und des Abscheideelements 10 insgesamt und führt zu einem Aufwölben des Abscheideelements 10 im Bereich der Überstände 24, nämlich in dem Bereich, in dem der mittels der Trägerplatten 16 ausgeübte Anpressdruck nicht wirkt.

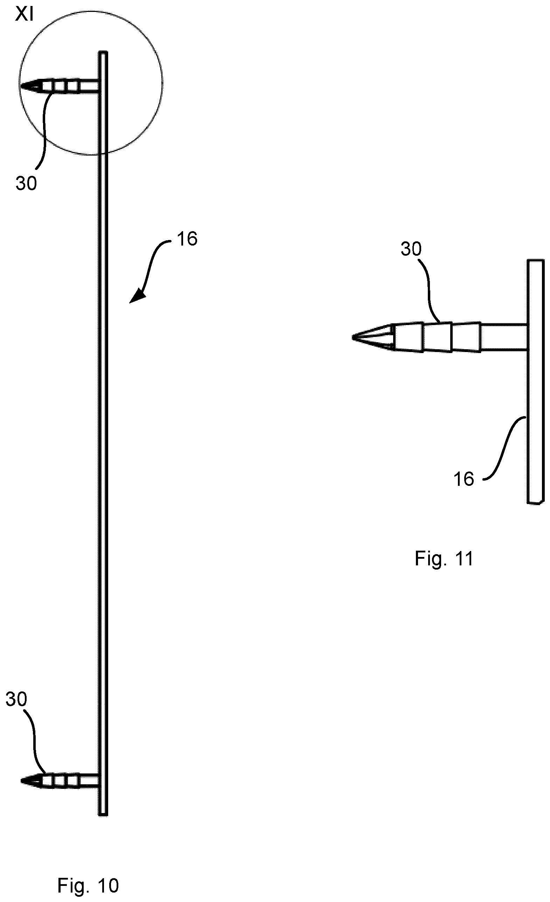

Die Darstellung in Figur 10 zeigt in einer Seitenansicht eine Trägerplatte 16 gemäß Figur 4, also eine Trägerplatte 16 mit Raststiften 30 als Verbindungsmittel 26, und die Darstellung in Figur 11 zeigt vergrößert einen Ausschnitt aus der Darstellung in Figur 10, nämlich eine Vergrößerung des dort mit XI bezeichneten Bereichs. Die Raststifte 30 sind mit der Trägerplatte 16 bevorzugt einstückig verbunden. Als Material für solche Trägerplatten 16, also Trägerplatten 16 mit Raststiften 30, kommt bevorzugt Kunststoff oder alternativ ein pyrolysefähiges Material, zum Beispiel Metall, in Betracht. Als Material für damit verbindbare Trägerplatten 16, also Trägerplatten 16 mit Rastausnehmungen 32, kommt bevorzugt ebenso Kunststoff oder alternativ ein pyrolysefähiges Material, zum Beispiel Metall, in Betracht. Alternativ kommt als Material auch Pappe, insbesondere Wellpappe in Betracht.

Besonders in der Darstellung in Figur 11 ist erkennbar, dass ein Raststift 30 ein Rastprofil zur insbesondere lösbaren Verrastung in einer Rastausnehmung 32 aufweist. Bei der gezeigten Ausführungsform umfasst das Rastprofil (vom freien Ende des Raststifts 30 aus gesehen) eine Spitze und daran anschließend zumindest einen konischen Abschnitt, der als Raststufe fungiert. Bei der gezeigten Ausführungsform umfasst der Raststift 30 drei Raststufen. Eine Raststufe, zwei Raststufen oder mehr als drei Raststufen sind ebenso denkbar. Die Rastausnehmungen 32 (Fig. 9) sind auf den Durchmesser der Raststifte 30 und den Durchmesser der dortigen zumindest einen Raststufe abgestimmte Löcher, nämlich kreisrunde oder quadratische Löcher. Optional kommen als Rastausnehmungen 32 auch übermassige Löcher in Form von Langlöchern in Betracht. Für Rastausnehmungen 32 in Form von Langlöchern gilt das an anderer Stelle zu Langlöchern Geschriebene entsprechend und ist jeweils mitzulesen, so dass zur Vermeidung von Wiederholung hier nur darauf verwiesen wird. Kurz gefasst ist eine Rastausnehmung 32 in Form eines Langlochs ein Langloch mit einer zu dem Raststift 30, nämlich dessen Durchmesser, passenden kurzen Achse und der in dem Langloch verrastete Raststift 30 ist entlang der langen Achse des Langlochs beweglich.

Weiter optional ist vorgesehen, dass die Raststifte 30 oder die Trägerplatten 16 mit Raststiften 30 insgesamt aus einem härteren Material, insbesondere einem härteren Kunststoff hergestellt sind als die Trägerplatten 16 mit Rastausnehmungen 32. Dies erleichtert das Verbinden von Trägerplatten 16 mit solchen Verbindungsmitteln 26, nämlich Raststiften 30 und Rastausnehmungen 32, und erleichtert ein Lösen einer bereits bestehenden Rastverbindung.

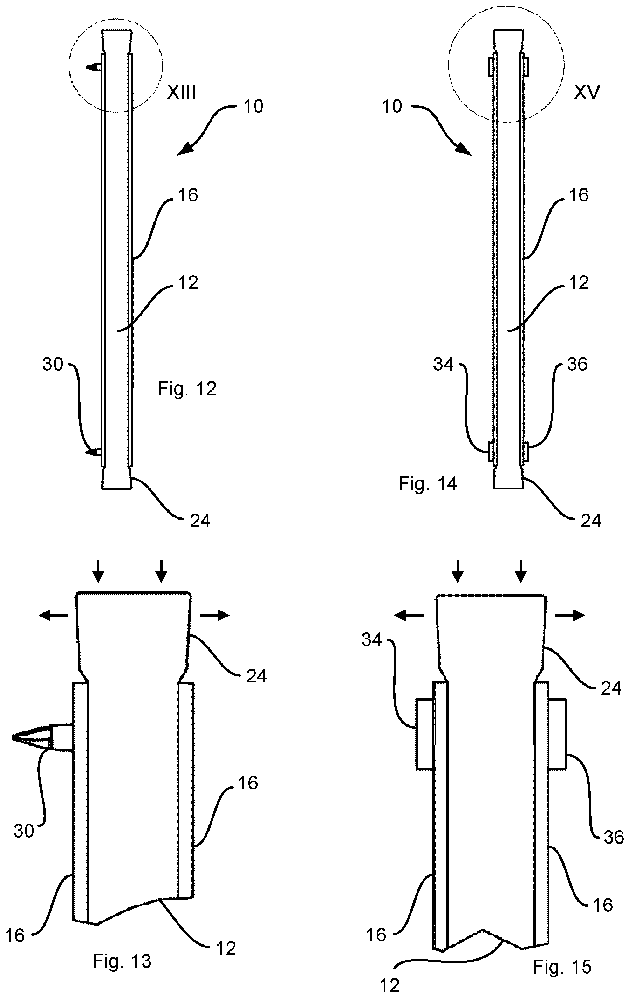

Die Darstellungen in Figur 12 und Figur 13 sowie die Darstellungen in Figur 14 und Figur 15 zeigen einen Schnitt durch ein Abscheideelement 10 quer zur Ebene zweier einander an der Abscheideschicht 12 des Abscheideelements 10 gegenüberliegender Trägerplatten 16. Die Darstellung in Figur 13 zeigt vergrößert einen Ausschnitt aus der Darstellung in Figur 12, nämlich eine Vergrößerung des dort mit XIII bezeichneten Bereichs und die Darstellung in Figur 15 zeigt vergrößert einen Ausschnitt aus der Darstellung in Figur 15, nämlich eine Vergrößerung des dort mit XV bezeichneten Bereichs. Die Trägerplatten 16 sind miteinander und mit der Abscheideschicht 12 verbunden. Die Verbindung komprimiert bei dem aufgrund der Verbindung resultierenden Abstand der Trägerplatten 16 das Material der Abscheideschicht 12. Aufgrund dieser Komprimierung sind die Überstände 24, also die Abscheideschicht 12 oberhalb und unterhalb der oberen bzw. unteren Kanten der Trägerplatten 16, in Relation zu den von der Komprimierung nicht erfassten Abschnitten der Abscheideschicht 12 aufgewölbt/aufgebauscht. In den Darstellungen in Figur 13 und Figur 15 ist eine Richtung des Aufwölbens mittels der kurzen horizontalen Pfeile rechts und links des jeweiligen Überstands 24 veranschaulicht. Diese Überstände 24 lassen sich aufgrund der Materialeigenschaften der Abscheideschicht 12 auch in Richtung auf die Trägerplatten 16 stauchen (die Überstände sind stauchbar). In den Darstellungen in Figur 13 und Figur 15 ist eine Richtung der Stauchbarkeit mittels der kurzen vertikalen Pfeile oberhalb des jeweiligen Überstands 24 veranschaulicht.

Die Darstellungen in Figur 12 und Figur 13 veranschaulichen die Verhältnisse mit Raststiften 30 und Rastausnehmungen 32 als Verbindungsmitteln 26. Die Darstellungen in Figur 14 und Figur 15 veranschaulichen die Verhältnisse mit Buchschrauben 34 als Verbindungsmitteln 26. Die jeweiligen Verbindungsmittel 26 durchdringen beim Verbinden der Trägerplatten 16 miteinander und mit der Abscheideschicht 12 die Abscheideschicht 12. In der Darstellung in Figur 13 ist insoweit auf der linken Seite das Ende des von der auf der rechten Seite gezeigten Trägerplatte 16 ausgehenden Raststifts 30 gezeigt und auf der Darstellung in Figur 15 sind rechts und links die Kopfabschnitte der Buchschraube 34, nämlich die Kopfabschnitte der Buchschraubenhülse 34 und des Buchschraubengegenstücks 36 gezeigt.

Auf die konkrete Art der Verbindungsmittel 26 kommt es für den Effekt des Aufwölbens der Abscheideschicht 12 beim Verbinden zweier Trägerplatten 16 miteinander und mit der Abscheideschicht 12 sowie aufgrund des Verbindens zweier Trägerplatten 16 miteinander und mit der Abscheideschicht 12 nicht an.

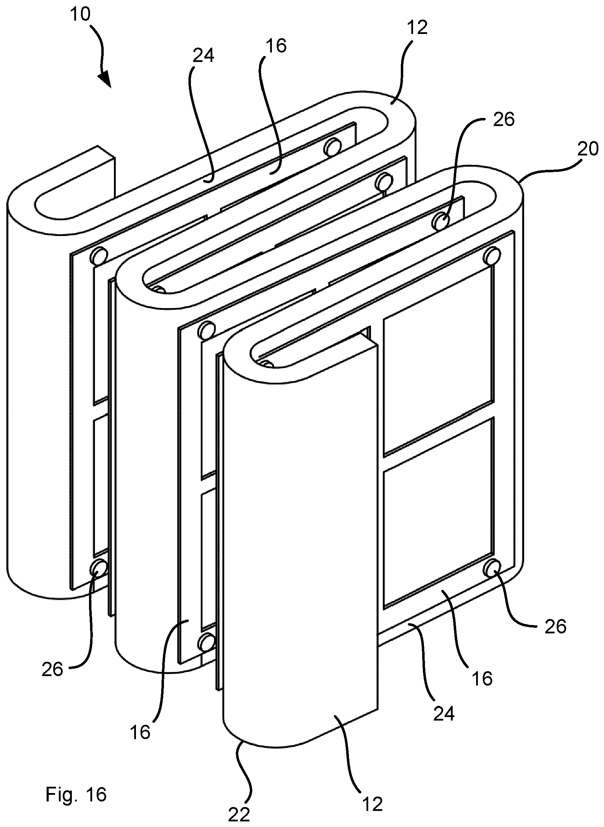

Die Darstellung in Figur 16 zeigt eine isometrische Ansicht des Abscheideelements 10 gemäß Figur 1 bis Figur 3. Dieses umfasst eine Abscheideschicht 12 mit damit verbundenen Trägerplatten 16. Die Abscheideschicht 12 ist von den Trägerplatten 16 eingefasst (ansonsten lose eingefasst) und die mit der Abscheideschicht 12 verbundenen Trägerplatten 16 bewirken bei einem entsprechenden Abstand der Trägerplatten 16 eine Komprimierung der Abscheideschicht 12. Die in der Darstellung in Figur 16 gezeigte Orientierung des Abscheideelements 10 ist eine mögliche Orientierung bei der Verwendung des Abscheideelements 10 und auch die zumindest zum Anmeldezeitpunkt vorgesehene Orientierung (übliche Orientierung) bei der Verwendung des Abscheideelements 10. Entsprechend der üblichen Orientierung können die langen Kanten 20, 22 der Abscheideschicht 12 auch als obere Kante 20 und untere Kante 22 bezeichnet werden.

Die Darstellung in Figur 17 zeigt die Situation gemäß Figur 16 in einer Draufsicht. Dort ist erkennbar, dass die Abscheideschicht 12 auf ihrer Front- und Rückseite mit Trägerplatten 16 verbunden ist. Die Verbindung ist mit Verbindungsmitteln 26 und übermassigen Löchern 38 gegeben. Die übermassigen Löcher 38 (Fig. 6) sind nicht erkennbar. Sie werden durch die Endabschnitte (Kopf) der Verbindungsmittel 26 verdeckt/abgedeckt.

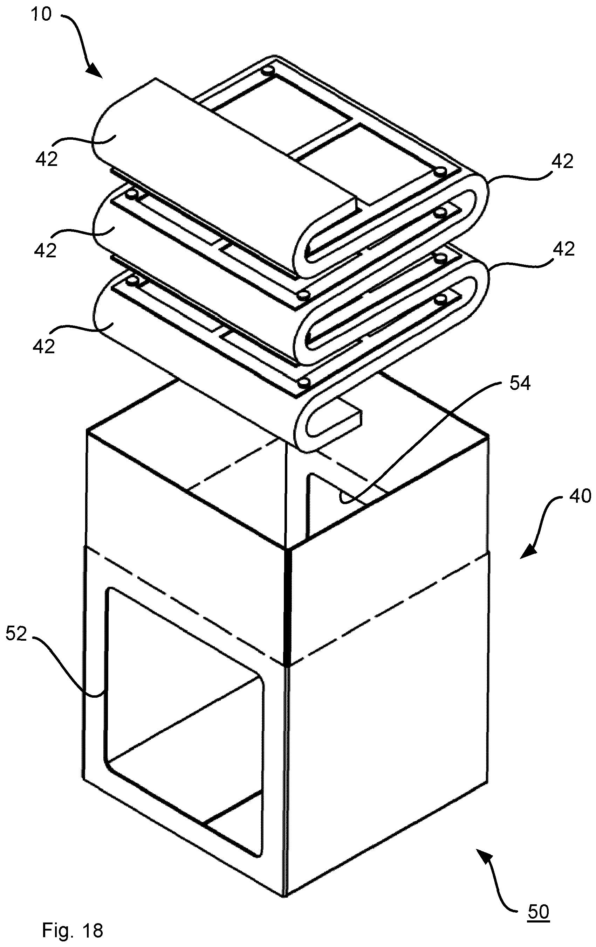

Die Darstellung in Figur 18 zeigt eine Momentaufnahme beim Platzieren (Einbau) eines Abscheideelements 10 gemäß Figur 16 und Figur 17 in einem zu dessen Aufnahme bestimmten Rahmen 40.

Die resultierende Kombination ist eine Farbnebelabscheidevorrichtung 50. Als Rahmen 40 fungiert zum Beispiel ein Karton, wie er ansonsten grundsätzlich zum Beispiel auch zur Aufnahme von Ware für einen Versand bekannt ist. Zum Erhalt der in Figur 16 gezeigten üblichen Orientierung des Abscheideelements 10 wird der Rahmen 40 mit dem darin platzierten Abscheideelement 10 auf eine der geschlossenen Seitenflächen gelegt, nämlich im Zusammenhang mit oder nach dem Einbringen des Abscheideelements 10 in den Rahmen 40.

Die Darstellungen in Figur 16, Figur 17 und Figur 18 zeigen, dass das Abscheideelement 10 für eine gebrauchsfertige Konfiguration mehrfach hin- und hergewendet wird/ist. Andere Möglichkeiten zur Beschreibung der Form des Abscheideelements 10 sind: im weitesten Sinne zickzackförmig, wellenförmig, mäanderförmig oder - wie in der EP 2 540 529 B - dreidimensional angeordnet. Jedenfalls ergeben sich aufgrund des mehrfachen Hin- und Herwendens und der resultierenden Form an dem Abscheideelement 10 Buge 42 und zwischen einzelnen Abschnitten des Abscheideelements 10 Taschen 44 (Fig. 17). Zwischen je zwei Bugen 42 befinden sich je zwei einander an der Abscheideschicht 12 paarweise gegenüberliegende Trägerplatten 16 und die Dimension der Trägerplatten 16 geben im Wesentlichen den Abstand zwischen je zwei Bugen 42 und damit im weitesten Sinne auch die Dimension des Abscheideelements 10 in der gebrauchsfertigen Konfiguration vor.

Die Darstellung in Figur 18 zeigt, dass beim Platzieren eines Abscheideelements 10 in einem Rahmen 40 oder bei einem in einem Rahmen 40 platzierten Abscheideelement 10 einzelne Buge 42 in Richtung auf eine Einströmöffnung 52 im Rahmen 40 weisen. Andere Buge 42 weisen in Richtung auf eine gegenüberliegende Ausströmöffnung 54 im Rahmen 40. Zwischen zwei in Richtung auf die Einströmöffnung 52 weisenden Bugen 42 befindet sich entlang des Abscheideelements 10 eine Tasche 44 sowie ein in Richtung auf die Ausströmöffnung 54 weisender Bug 42 und zwischen zwei in Richtung auf die Ausströmöffnung 54 weisenden Bugen 42 befindet sich entlang des Abscheideelements 10 ebenfalls eine Tasche 44 sowie ein in Richtung auf die Einströmöffnung 52 weisender Bug 42. Die Taschen 44 bestehen zwischen je zwei einander gegenüberliegenden Abschnitten des Abscheideelements 10/der Abscheideschicht 12.

Die weiter oben erwähnte Beweglichkeit der Trägerplatten 16 oder einzelner Trägerplatten 16 relativ zu der Abscheideschicht 12, insbesondere im Falle von durch Langlöcher 38 geführte Verbindungsmittel 26, erweist sich beim Hin- und Herwenden des Abscheideelements 10 zum Erhalt einer Form wie in den Darstellungen in Figur 16, Figur 17 und Figur 18 gezeigt, als vorteilhaft, denn genau wie bei einer Innenkurve und einer Außenkurve einer Straße ergeben sich beim Umwenden in Bereich der Buge 42 unterschiedlich lange Strecken.

Bezüglich dieser resultierenden unterschiedlich langen Strecken wird auf die in der Darstellung in Figur 17 bei dem Bug 42 rechts oben auf der Außenseite der Abscheideschicht 12 und auf der Innenseite der Abscheideschicht 12 eingezeichneten, gestrichelten Doppelpfeile hingewiesen. Ersichtlich ist der Doppelpfeil auf der Außenseite der Abscheideschicht 12 deutlich länger als der Doppelpfeil auf der gegenüberliegenden Innenseite. Die Doppelpfeile veranschaulichen auch einen Abstand der Trägerplatten 16 auf der Außenseite der Abscheideschicht 12 und der gegenüberliegenden Innenseite der Abscheideschicht 12. Der Abstand der Trägerplatten 16 ist auf der Außenseite größer als auf der Innenseite. Beim ursprünglichen Verbinden der Trägerplatten 16 mit der Abscheideschicht 12 oder miteinander sowie mit der Abscheideschicht 12 sind die Trägerplatten 16 auf derselben Oberfläche der Abscheideschicht 12 im Wesentlichen gleichmäßig beabstandet, wie dies in den Darstellungen in Figur 1 bis Figur 3 sowie Figur 7 gezeigt ist. Beim Hin- und Herwenden des Abscheideelements 10 zum Erhalt einer Form gemäß Figur 16 bis Figur 18 erlaubt die erwähnte Beweglichkeit der Trägerplatten 16 oder einzelner Trägerplatten 16 relativ zu der Abscheideschicht 12 eine Verschiebung der Trägerplatten 16 auf der Abscheideschicht 12, und zwar in Richtung von deren Längserstreckung. Das Verschieben geschieht entweder selbsttätig im Rahmen des Hin- und Herwendens des Abscheideelements 10 oder wird beim Hin- und Herwenden des Abscheideelements 10 durch die damit befasste Person manuell veranlasst oder unterstützt.

Die Trägerplatten 16 stützen die Abscheideschicht 12, ohne das zum Erhalt der gebrauchsfertigen Konfiguration notwendige Hin- und Herwenden zu behindern. Die unteren und oberen Ränder der Trägerlage 14, also die unteren und oberen Ränder der Gesamtheit der Trägerplatten 16, und ggf. die unteren und oberen Ränder jeder einzelne Trägerplatte 16 fungieren für den Überstand 24 der Abscheideschicht 12 wie eine Kante, an der sich der Überstand 24 gewissermaßen auffächert oder staucht und aufwölbt und/oder (zumindest teilweise) umlegt, so dass der Überstand 24 die gewünschte Dichtfunktion zur jeweils angrenzenden Innenoberfläche des Rahmens 40 erfüllen kann/erfüllt.

Zwischen einzelnen Flächenabschnitten des Abscheideelements 10 befinden sich ggf. Abstandshalter (nicht gezeigt) oder dergleichen, nämlich Abstandshalter zum Offenhalten der Taschen 44. Als Abstandshalter kommen zum Beispiel Abstandshalter wie in der EP 2 540 509 B beschrieben in Betracht.

Einzelne im Vordergrund stehende Aspekte der hier vorgelegten Beschreibung lassen sich damit kurz wie folgt zusammenfassen: Angegeben werden ein Farbnebelabscheideelement 10 sowie eine Farbnebelabscheidevorrichtung 50 mit einem solchen Farbnebelabscheideelement 10, wobei das Farbnebelabscheideelement 10 eine Farbnebelabscheideschicht 12 und auf deren Front- und/oder Rückseite eine Trägerlage 14 umfasst und wobei die oder jede Trägerlage 14 mit Abstand von einander gegenüberliegenden langen Kanten 20, 22 der Farbnebelabscheideschicht 12 endet, so dass über die Ränder der Trägerlage 14 oder über die Ränder ggf. einzelner Trägerplatten 16 hinaus ein stauchbarer Überstand 24 der Farbnebelabscheideschicht 12 verbleibt, wobei optional mittels der front- und rückseitigen Trägerlagen 14 sowie aufgrund deren Verbindung eine Komprimierung der Farbnebelabscheideschicht 12 resultiert und wobei die nicht komprimierten Überstände 24 in Relation zu den mittels der Trägerlagen 14 komprimierten Bereichen der Farbnebelabscheideschicht 12 aufgewölbt sind.

### Bezugszeichenliste

- 10: Farbnebelabscheideelement, Abscheideelement
- 12: Farbnebelabscheideschicht, Abscheideschicht
- 14: Trägerlage
- 16: Trägerplatte
- 18: (frei)
- 20: lange Kante / obere Kante (der Abscheideschicht)
- 22: lange Kante / untere Kante (der Abscheideschicht)
- 24: (stauchbarer) Überstand
- 26: Verbindungsmittel
- 28: Rahmen (Teil einer Trägerplatte)
- 30: Raststift (Verbindungsmittel)
- 32: Rastausnehmung (Verbindungsmittel)
- 34: Buchschraube, Buchschraubenhülse (Verbindungsmittel)
- 36: Buchschraubengegenstück (Verbindungsmittel)
- 38: (übermassiges) Loch, Langloch (Verbindungsmittel)
- 40: Rahmen
- 42: Bug
- 44: Tasche
- 46, 48: (frei)
- 50: Farbnebelabscheidevorrichtung
- 52: Einströmöffnung
- 54: Ausströmöffnung

## Patentansprüche

1. Farbnebelabscheideelement (10) mit
einer Farbnebelabscheideschicht (12) und
jeweils einer Trägerlage (14) auf einer Front- und Rückseite der Farbnebelabscheideschicht (12),
wobei die front- und rückseitigen Trägerlagen (14) miteinander und mit der Farbnebelabscheideschicht (12) mittels Verbindungsmitteln (26) verbunden sind,
wobei die Farbnebelabscheideschicht (12) zwei gegenüberliegende lange Kanten (20, 22) aufweist und
wobei die front- und rückseitigen Trägerlagen (14) mit Abstand von den langen Kanten (20, 22) enden und aufgrund der Abstände stauchbare Überstände (24) der Farbnebelabscheideschicht (12) resultieren.

2. Farbnebelabscheideelement (10) nach Anspruch 1 und
mit einer komprimierbaren Farbnebelabscheideschicht,
wobei mittels der front- und rückseitigen Trägerlagen (14) sowie aufgrund deren Verbindung eine Komprimierung der komprimierbaren Farbnebelabscheideschicht (12) resultiert und
wobei die nicht komprimierten Überstände (24) in Relation zu den mittels der Trägerlagen (14) komprimierten Bereichen der Farbnebelabscheideschicht (12) aufgewölbt sind.

3. Farbnebelabscheideelement (10) nach Anspruch 1 und
mit einer komprimierbaren Farbnebelabscheideschicht und, hergestellt mittels eines die folgenden Schritte umfassenden Verfahrens:
mittels der front- und rückseitigen Trägerlagen (14) sowie aufgrund deren Verbindung miteinander wird die komprimierbare Farbnebelabscheideschicht (12) komprimiert und es resultiert eine Komprimierung der komprimierbaren Farbnebelabscheideschicht (12) und
die nicht komprimierten Überstände (24) sind in Relation zu den mittels der Trägerlagen (14) komprimierten Bereichen der Farbnebelabscheideschicht (12) aufgewölbt.

4. Farbnebelabscheideelement (10) nach einem der Ansprüche 1, 2 oder 3,
wobei eine Trägerlage (14) mehrere Trägerplatten (16) umfasst und wobei alle Trägerplatten (16) einer Trägerlage (14) maßgleich ausgebildet sind.

5. Farbnebelabscheideelement (10) nach einem der Ansprüche 1, 2, 3 oder 4,
wobei die Trägerlagen (14) übermassige Löcher (38) aufweisen und jeweils ein Verbindungsmittel (26) durch jeweils an der Farbnebelabscheideschicht (12) gegenüberliegende übermassige Löcher (38) jeweils einer front- und rückseitigen Trägerlage (14) geführt sind.

6. Farbnebelabscheideelement (10) nach einem der Ansprüche 1, 2, 3, 4 oder 5,
mit Buchschrauben (34) als Verbindungsmittel (26).

7. Farbnebelabscheideelement (10) nach einem der Ansprüche 1, 2, 3 oder 4,
wobei zumindest eine Trägerlage (14) Löcher (38) aufweist und Verbindungsmittel (26) einer an der Farbnebelabscheideschicht (12) gegenüberliegenden Trägerlage (14) in die Löcher (38) eingreifen.

8. Farbnebelabscheideelement (10) nach einem der Ansprüche 1, 2, 3, 4 oder 7,
mit von einer Trägerplatte (16) ausgehenden Raststiften (30) als Verbindungsmittel (26).

9. Farbnebelabscheideelement (10) nach einem der Ansprüche 5 oder 7,
wobei die Löcher (38) als Langlöcher (38) ausgeführt sind.

10. Farbnebelabscheidevorrichtung (50) mit zumindest einem Farbnebelabscheideelement (10) nach einem der vorangehenden Ansprüche.

11. Verwendung eines Farbnebelabscheideelements (10) nach einem der Ansprüche 1-9 zum Abscheiden von mit einem Rohgasstrom mitgeführten Partikeln.

12. Verwendung einer Farbnebelabscheidevorrichtung (50) nach Anspruch 10 zum Abscheiden von mit einem Rohgasstrom mitgeführten Partikeln.

## Claims

1. A paint mist separating element (10) comprising
a paint mist separating layer (12), and
a support layer (14) on each of the front and rear sides of the paint mist separating layer (12),
wherein the front and rear support layers (14) are bonded to one another and to the paint mist separating layer (12) by means of bonding elements (26),
wherein the paint mist separating layer (12) has two opposite long edges (20, 22), and
wherein the front and rear support layers (14) end at a distance from the long edges (20, 22) and result in compressible protrusions (24) of the paint mist separating layer (12) due to said distances.

2. The paint mist separating element (10) according to claim 1, and
comprising a compressible paint mist separating layer, wherein the front and rear support layers (14) as well as their bonding result in the compression of the compressible paint mist separating layer (12), and
wherein the uncompressed protrusions (24) are bulged outward in relation to the areas of the paint mist separating layer (12) compressed by the support layers (14).

3. The paint mist separating element (10) according to claim 1, and
comprising a compressible paint mist separating layer, and
manufactured by a method comprising the following steps:
compressing the compressible ink mist separating layer (12) by means of the front and rear support layers (14) as well as due their bonding to one another, resulting in the compression of the compressible paint mist separating layer (12), and
bulging the uncompressed protrusions (24) outward in relation to the areas of the paint mist separating layer (12) compressed by the support layers (14).

4. The paint mist separating element (10) according to any one of claims 1, 2, or 3,
wherein a support layer (14) comprises a plurality of support plates (16) and wherein all support plates (16) of a support layer (14) are of identical dimensions.

5. The paint mist separating element (10) according to any one of claims 1, 2, 3, or 4,
wherein the support layers (14) have oversized holes (38), and a respective fastener (26) is passed through the respective oversized holes (38) in the paint mist separating layer (12) that are opposite one another on each front and rear support layer (14).

6. The paint mist separating element (10) according to any one of claims 1, 2, 3, 4, or 5, comprising binding screws (34) as fasteners (26).

7. The paint mist separating element (10) according to any one of claims 1, 2, 3, or 4,
wherein at least one support layer (14) has holes (38), and fasteners (26) of a support layer (14) opposite the paint mist separating layer (12) engage with the holes (38).

8. The paint mist separating element (10) according to any one of claims 1, 2, 3, 4, or 7,
comprising locking pins (30) extending from a support plate (16) as fasteners (26).

9. The paint mist separating element (10) according to any one of claims 5 or 7,
wherein the holes (38) are configured as slotted holes (38).

10. A paint mist separating device (50) comprising at least one paint mist separating element (10) according to any one of the preceding claims.

11. Use of a paint mist separating element (10) according to any one of claims 1-9 for separating particles carried along in a raw gas stream.

12. The use of a paint mist separating device (50) according to claim 10 for separating particles carried along in a raw gas stream.

## Revendications

1. Élément (10) de séparation de brume de peinture présentant
une couche (12) de séparation de brume de peinture et
une couche de support (14) respectivement sur une face avant et arrière de la couche (12) de séparation de brume de peinture,
dans lequel les couches de support (14) de face avant et arrière sont reliées entre elles et à la couche (12) de séparation de brume de peinture au moyen de moyens de liaison (26),
dans lequel la couche (12) de séparation de brume de peinture comprend deux bords longs (20, 22) mutuellement opposés et
dans lequel les couches de support (14) de face avant et arrière se terminent à distance des bords longs (20, 22) et, en raisons des distances, il en résulte des saillies (24) pouvant être refoulées de la couche (12) de séparation de brume de peinture.

2. Élément (10) de séparation de brume de peinture selon la revendication 1 et
présentant une couche de séparation de brume de peinture compressible,
dans lequel, au moyen des couches de support (14) de face avant et arrière, ainsi qu'en raison de leur liaison, il résulte une compression de la couche (12) de séparation de brume de peinture compressible, et
dans lequel les saillies (24) non comprimées sont bombées par rapport aux zones de la couche (12) de séparation de brume de peinture qui sont comprimées au moyen des couches de support (14).

3. Élément (10) de séparation de brume de peinture selon la revendication 1 et
présentant une couche de séparation de brume de peinture compressible et
fabriqué selon un procédé comprenant les étapes suivantes :
au moyen des couches de support (14) de face avant et arrière, ainsi qu'en raison de leur liaison, la couche (12) de séparation de brume de peinture compressible est comprimée et il en résulte une compression de la couche (12) de séparation de brume de peinture compressible, et
les saillies (24) non comprimées sont bombées par rapport aux zones de la couche (12) de séparation de brume de peinture qui sont comprimées au moyen des couches de support (14).

4. Élément (10) de séparation de brume de peinture selon l'une des revendications 1, 2 ou 3,
dans lequel une couche de support (14) comprend plusieurs plaques de support (16) et dans lequel toutes les plaques de support (16) d'une couche de support (14) sont de conception identique.

5. Élément (10) de séparation de brume de peinture selon l'une des revendications 1, 2, 3 ou 4,
dans lequel les couches de support (14) comprennent des trous surdimensionnés (38) et un moyen de liaison (26) respectif est guidé à travers les trous surdimensionnés (38) respectifs d'une couche de support (14) respective de face avant et arrière, situés en regard les uns des autres au niveau de la couche (12) de séparation de brume de peinture.

6. Élément (10) de séparation de brume de peinture selon l'une des revendications 1, 2, 3, 4 ou 5,
présentant des vis à relier (34) en tant que moyens de liaison (26).

7. Élément (10) de séparation de brume de peinture selon l'une des revendications 1, 2, 3 ou 4,
dans lequel au moins une couche de support (14) comprend des trous (38) et des moyens de liaison (26) d'une couche de support (14) opposée à la couche (12) de séparation de brume de peinture s'engagent dans les trous (38).

8. Élément (10) de séparation de brume de peinture selon l'une des revendications 1, 2, 3, 4 ou 7,
présentant des tiges d'encliquetage (30) s'étendant depuis une plaque de support (16) en tant que moyens de liaison (26).

9. Élément (10) de séparation de brume de peinture selon l'une des revendications 5 ou 7,
dans lequel les trous (38) sont réalisés sous forme de trous oblongs (38).

10. Dispositif (50) de séparation de brume de peinture présentant au moins un élément (10) de séparation de brume de peinture selon l'une des revendications précédentes.

11. Utilisation d'un élément (10) de séparation de brume de peinture selon l'une des revendications 1 à 9 pour la séparation de particules entraînées par un flux de gaz brut.

12. Utilisation d'un dispositif (50) de séparation de brume de peinture selon la revendication 10 pour la séparation de particules entraînées par un flux de gaz brut.
